(19) Europäisches Patentamt
European Patent Office
Office européen des brevets

(11) EP 4 163 091 A1

(12) **EUROPEAN PATENT APPLICATION**
published in accordance with Art. 153(4) EPC

(43) Date of publication:
**12.04.2023 Bulletin 2023/15**

(21) Application number: **21818511.4**

(22) Date of filing: **02.06.2021**

(51) International Patent Classification (IPC):
***B29C 70/06*** *(2006.01)* ***B29B 11/16*** *(2006.01)*
***B29C 70/10*** *(2006.01)*

(52) Cooperative Patent Classification (CPC):
**B29B 11/16; B29C 70/06; B29C 70/10**

(86) International application number:
**PCT/JP2021/021104**

(87) International publication number:
**WO 2021/246466 (09.12.2021 Gazette 2021/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.06.2020 JP 2020096947**

(71) Applicant: **Toray Industries, Inc.**
**Tokyo 103-8666 (JP)**

(72) Inventors:
- **TAKEHARA, Tomohiro**
  **Iyo-gun, Ehime 791-3193 (JP)**
- **HONMA, Masato**
  **Iyo-gun, Ehime 791-3193 (JP)**

(74) Representative: **Mewburn Ellis LLP**
**Aurora Building**
**Counterslip**
**Bristol BS1 6BX (GB)**

(54) **FIBER REINFORCED PLASTIC, INTEGRALLY MOLDED PRODUCT, AND PREPREG**

(57) The present invention relates to a fiber reinforced plastic including a reinforcing fiber group including reinforcing fibers, a thermosetting resin layer including a first thermosetting resin, and a thermoplastic resin layer, wherein the thermoplastic resin layer is included as a surface layer of the fiber reinforced plastic, an interface between the thermoplastic resin layer and the thermosetting resin layer is located inside the reinforcing fiber group, and the thermoplastic resin layer includes a disperse phase of a second thermosetting resin.

FIG. 1

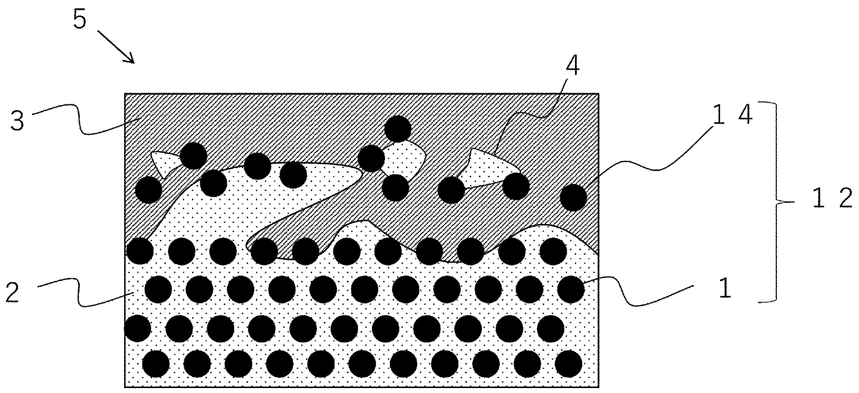


EP 4 163 091 A1

## Description

### TECHNICAL FIELD

The present invention relates to a fiber-reinforced plastic, an integrated product, and a prepreg.

### BACKGROUND ART

Fiber-reinforced plastics, which are obtained by combining a thermosetting resin used as a matrix resin with a reinforcing fiber such as carbon fiber and glass fiber, are lightweight, and at the same time are excellent in mechanical properties such as strength and rigidity, heat resistance and corrosion resistance. Therefore, the fiber-reinforced plastics are used in various fields such as aerospace, automobiles, railroad vehicles, ships, civil engineering and construction, and sporting goods.

However, the fiber-reinforced plastics are not suitable for manufacturing parts or molded products having complex shapes in a single molding step, and in the above use applications, it is necessary to manufacture a member made of the fiber-reinforced plastic and then integrate the member with another member by joining, fastening, or the like.

For example, as a technique for integrating fiber-reinforced plastics with members of the same or different types, mechanical joining methods using bolts, rivets, screws, or the like, and joining methods using adhesives are used. In the mechanical joining methods, since a hole is formed in the fiber-reinforced plastic and another member, there is a problem that strength around the hole is reduced. In the case where an adhesive is interposed, there is a problem that joining and adhesion failure occurs due to peeling or the like at an interface between the fiber-reinforced plastic molded product and another member. There is also a problem in these joining methods that processability deteriorates since a step of pre-processing a joint portion, such as a hole-drilling step or an adhesive application step, is required.

Therefore, providing a thermoplastic resin on a surface of a fiber-reinforced plastic is proposed as a method for joining the fiber-reinforced plastic to another member without making a hole to implement fastening or using an adhesive to be interposed.

Patent Literature 1 discloses a laminate in which a thermoplastic resin layer disposed on a surface and a thermosetting resin layer as a matrix resin of a fiber-reinforced plastic, each having a rugged shape, are integrated, and a method for manufacturing the laminate. Since the thermoplastic resin layer and the thermosetting resin layer each having a rugged shape are integrated with each other, the two layers are strongly joint. Furthermore, it is described that by disposing the thermoplastic resin layer on the surface, it is possible to melt the thermoplastic resin layer to join another adherend to the fiber-reinforced plastic.

Patent Literature 2 discloses a laminated molded product impregnated with a thermosetting resin material formed with fine gaps and a method for manufacturing the laminated molded product. It is described that since the thermoplastic resin material is inserted between fiber-reinforced layers, interlaminar toughness of the molded product is improved.

Patent Literature 3 discloses a resin molded body in which a thermoplastic resin molded body and a thermosetting resin molded body having a thermoplastic resin portion provided to be exposed on a part of a surface thereof are joined together by welding. It is described that the thermoplastic resin molded body and the thermosetting resin molded body can be joined together without using an adhesive or a fastening member such as a rivet since the thermoplastic resin portion can achieve integration therebetween by welding.

Patent Literature 4 discloses a joined body in which a first molded body with exposed reinforcing fibers and a second molded body are integrated, and a method for manufacturing the joined body. It is described that joining strength is improved since the second molded body is entwined with a reinforcing fiber-exposed portion formed on a surface of the first molded body.

### CITATION LIST

### PATENT LITERATURE

Patent Literature 1: WO2004/060658
Patent Literature 2: WO2008/020628
Patent Literature 3: JP2016-175397A
Patent Literature 4: JP2017-39234A

## SUMMARY OF INVENTION

### TECHNICAL PROBLEM

The laminate described in Patent Literature 1 does not require drilling or adhesives, can effectively utilize properties such as strength and rigidity of the fiber-reinforced resin, and has simple joining steps, and therefore has high processability. However, in order to expand an application range as a product, it is necessary to further improve joining quality. For example, since the thermoplastic resin layer flows when it is welded, variations in thickness and disordered alignment of the reinforcing fibers may be accompanied and concerned.

The laminated molded product described in Patent Literature 2 has a structure that focuses on properties between layers, and when the thermoplastic resin material is disposed on the surface thereof, the thermoplastic resin material can be regarded as an adhesive layer during welding. However, in the laminated molded product, since the thermoplastic resin material is impregnated with the thermosetting resin and embedded therein, it is difficult to ensure a sufficient adhesion area during welding. That is, it is not suitable for the joining step with another adherend, which is a problem to be solved.

The resin molded body described in Patent Literature 3 has a configuration in which the thermoplastic resin member that can form an adhesive layer when welded is simply embedded in the thermosetting resin member, so that the thermoplastic resin member easily flows out when welded, and therefore, it is difficult to control a thickness of the adhesive layer. Furthermore, since there is no disclosure of a reinforcing structure at the boundary between the thermosetting resin member and the thermoplastic resin member, there is a possibility that joining strength is insufficient.

The joined body described in Patent Literature 4 aims at high-strength joining due to a formation of a reinforcing structure by exposing fibers by subjecting a surface of a sheet molding compound (SMC) having a thermosetting resin as a matrix resin to sanding or frame treatment, and by welding CFRP with a thermoplastic resin as a matrix resin on a surface thereof. However, methods such as sanding and frame treatment, which cause great damage to the molded body, cannot satisfy the quality and destroy the exposed fibers, and therefore, reinforcing effect of the fibers is limited.

Therefore, an object of the present invention is to provide a fiber-reinforced plastic and an integrated product that can prevent resin outflow and fiber alignment disorder during integration, thereby exhibiting excellent joining strength, and provide a prepreg having high processability capable of forming the fiber-reinforced plastic.

### SOLUTION TO PROBLEM

As a result of extensive studies, the inventors of the present invention found that the above problems can be solved, and they completed the present invention. That is, the present invention is as follows.

[1] A fiber-reinforced plastic, including: a reinforcing fiber group containing reinforcing fibers; a thermosetting resin layer containing a first thermosetting resin; and a thermoplastic resin layer, in which

the thermoplastic resin layer is provided as a surface layer of the fiber-reinforced plastic,
an interface between the thermoplastic resin layer and the thermosetting resin layer is positioned inside the reinforcing fiber group, and
the thermoplastic resin layer contains a dispersed phase of a second thermosetting resin.

[2] The fiber-reinforced plastic according to [1], in which the reinforcing fibers contained in the thermoplastic resin layer are in contact with the dispersed phase of the second thermosetting resin.
[3] The fiber-reinforced plastic according to [1] or [2], in which a plurality of the reinforcing fibers contained in the thermoplastic resin layer are bound by the second thermosetting resin.
[4] The fiber-reinforced plastic according to any one of [1] to [3], in which the dispersed phase of the second thermosetting resin has the major axis length of 50 nm or more.
[5] The fiber-reinforced plastic according to [4], in which the dispersed phase of the second thermosetting resin has a major axis length of 1 μm or more.
[6] The fiber-reinforced plastic according to any one of [1] to [5], in which in a thickness direction cross section, a volume ratio of the dispersed phase of the second thermosetting resin contained in the thermoplastic resin layer is 10 volume% or more with respect to 100 volume% of the thermoplastic resin layer in the reinforcing fiber group.
[7] The fiber-reinforced plastic according to any one of [1] to [5], in which in a thickness direction cross section, a volume ratio of the dispersed phase of the second thermosetting resin contained in the thermoplastic resin layer is 3 volume% or more and 50 volume% or less with respect to 100 volume% of the reinforcing fibers contained in the thermoplastic resin layer.
[8] The fiber-reinforced plastic according to any one of [1] to [5], in which a sum of a volume ratio of the reinforcing

fibers contained in the thermoplastic resin layer and a volume ratio of the second thermosetting resin is 10 volume% or more with respect to 100 volume% of a region of 50 μm from the interface between the thermoplastic resin layer and the thermosetting resin layer toward a surface of the thermoplastic resin layer in a thickness direction cross section.

[9] The fiber-reinforced plastic according to any one of [1] to [8], in which the second thermosetting resin is the same type of resin as the first thermosetting resin.

[10] The fiber-reinforced plastic according to any one of [1] to [9], in which the second thermosetting resin has a glass transition temperature of 150°C or higher.

[11] An integrated product, including a first member including the fiber-reinforced plastic according to any one of [1] to [10] and a second member, which are joined via the thermoplastic resin layer of the fiber-reinforced plastic.

[12] The integrated product according to [11], in which in the integrated product, a distance t between the thermosetting resin layer and the second member is 10 μm or more.

[13] A prepreg, including: a reinforcing fiber group containing reinforcing fibers; a thermosetting resin layer containing a first thermosetting resin; and a thermoplastic resin layer, in which

the thermoplastic resin layer is provided as a surface layer of the prepreg,
an interface between the thermoplastic resin layer and the thermosetting resin layer is positioned inside the reinforcing fiber group, and
the thermoplastic resin layer contains a dispersed phase of a second thermosetting resin in contact with the reinforcing fibers.

[14] The prepreg according to [13], in which the dispersed phase of the second thermosetting resin has a major axis length of 1 μm or more.

[15] The prepreg according to [13] or [14], in which a sum of a volume ratio of the reinforcing fibers contained in the thermoplastic resin layer and a volume ratio of the second thermosetting resin is 10 volume% or more with respect to 100 volume% of a region of 50 μm from the interface between the thermoplastic resin layer and the thermosetting resin layer toward a surface of the thermoplastic resin layer in a thickness direction cross section.

[16] The prepreg according to any one of [13] to [15], in which the second thermosetting resin is the same type of resin as the first thermosetting resin.

[17] The fiber-reinforced plastic according to any one of [1] to [10], the integrated product according to [11] or [12], or the prepreg according to any one of [13] to [16], in which a reinforcing fiber having a surface free energy of 10 $mJ/m^2$ to 50 $mJ/m^2$ as measured by the Wilhelmy method is used as the reinforcing fibers.

## ADVANTAGEOUS EFFECTS OF INVENTION

According to the present invention, it is possible to obtain a fiber-reinforced plastic and an integrated product that can prevent resin outflow and fiber alignment disorder in a high temperature state for welding and integrating with a second member, thereby exhibiting excellent joining strength and quality, and to obtain a prepreg having high processability capable of forming the fiber-reinforced plastic.

## BRIEF DESCRIPTION OF DRAWINGS

[FIG. 1] FIG. 1 is a schematic diagram illustrating one embodiment of a prepreg or a fiber-reinforced plastic of the present invention.

[FIG. 2] FIG. 2 is a diagram for explaining a cross-sectional observation surface of the prepreg or the fiber-reinforced plastic according to the embodiment of the present invention.

[FIG. 3] FIG. 3 is a schematic diagram of a cross section perpendicular to a prepreg plane or a fiber-reinforced plastic plane in the present invention, which helps to explain a method for obtaining an average boundary straight line of an interface between a thermosetting resin layer and a thermoplastic resin layer.

## DESCRIPTION OF EMBODIMENTS

The present invention will be described below with appropriate reference to the drawings, but the drawings are used to facilitate understanding of the present invention and are not intended to limit the present invention.

<Prepreg>

A prepreg according to the present invention is a prepreg including a reinforcing fiber group containing reinforcing fibers, a thermosetting resin layer containing a first thermosetting resin, and a thermoplastic resin layer, in which

the thermoplastic resin layer is provided as at least one surface layer of the prepreg,
an interface between the thermoplastic resin layer and the thermosetting resin layer is positioned inside the reinforcing fiber group, and
the thermoplastic resin layer includes a dispersed phase of a second thermosetting resin in contact with the reinforcing fibers (hereinafter may be simply referred to as the dispersed phase).

FIG. 1 is a schematic diagram of a cross section perpendicular to a plane of the prepreg according to the embodiment of the present invention.

As illustrated in FIG. 1, the prepreg according to the embodiment of the present invention includes a reinforcing fiber group 12 containing reinforcing fibers 1 and 14, a thermosetting resin layer 2 containing a first thermosetting resin, and a thermoplastic resin layer 3. A surface layer of the prepreg is the thermoplastic resin layer 3. An interface between the thermoplastic resin layer 3 and the thermosetting resin layer 2 is positioned inside the reinforcing fiber group 12. The thermoplastic resin layer 3 contains a dispersed phase 4 of a second thermosetting resin in contact with the reinforcing fibers 14. Note that in the embodiment illustrated in FIG. 1, the thermoplastic resin layer 3 constitutes the entire surface layer of the prepreg, but as will be described later, the thermoplastic resin layer 3 may constitute only a part of the surface layer of the prepreg.

In the prepreg according to the embodiment of the present invention, the dispersed phase 4 of the second thermosetting resin refers to a region whose main component is a partially independent thermosetting resin in the thermoplastic resin layer observed in a cross section perpendicular to the plane of the prepreg. For example, the dispersed phase 4 of the second thermosetting resin in contact with the reinforcing fibers 14 exists partially independently as a discontinuous region in a continuous region containing a thermoplastic resin as a main component.

In a sea-island structure, the thermoplastic resin layer corresponds to a sea phase, and the dispersed phase of the second thermosetting resin in contact with the reinforcing fibers corresponds to an island phase. That is, it can be said that the thermoplastic resin layer 3 has a sea-island structure in which the island phase, which contains a thermosetting resin as a main component, is dispersed in the sea phase, which contains the thermoplastic resin as a main component.

It is preferable that in the thermoplastic resin layer 3 containing the dispersed phase 4 and the reinforcing fibers 14, the second thermosetting resin is in contact with the plurality of reinforcing fibers 14 while forming the dispersed phase 4 of the second thermosetting resin.

That is, the prepreg according to the present embodiment can be regarded as that the plurality of reinforcing fibers are partially bound to each other by the dispersed phase of the second thermosetting resin being in contact with the plurality of reinforcing fibers contained in the thermoplastic resin layer. The prepreg according to the present embodiment can contribute to improvement in quality, such as reducing alignment disorder and movement of the reinforcing fibers, preventing excessive outflow of the thermoplastic resin layer, and ensuring a thickness of the thermoplastic resin layer that becomes an adhesive layer, even when the thermoplastic resin layer is in a fluid state due to a high temperature condition when molding into a molded product and welding an obtained molded product.

A shape of the dispersed phase of the second thermosetting resin is not particularly limited as long as it forms an independent region. For example, in cross-sectional observation of the dispersed phase of the second thermosetting resin contained in the thermoplastic resin layer in a cross section perpendicular to the prepreg plane, it may be fibrous, circular, elliptical, rectangular, or a complex shape with unevenness.

Here, a length of a major axis of the dispersed phase of the second thermosetting resin is preferably 50 nm or more, more preferably 100 nm or more, still more preferably 300 nm or more, and even more preferably 1 $\mu$m or more. By setting the length of the major axis of the dispersed phase of the second thermosetting resin within such a range, it is possible to effectively prevent flowing of the thermoplastic resin layer under a high temperature condition during molding or welding, and to ensure a higher quality.

A known method of observing a cross section perpendicular to a fiber direction of the prepreg can be used to confirm the length of the major axis of the dispersed phase of the second thermosetting resin. Examples of the method include a method of measuring from a cross-sectional image acquired by using an X-ray CT, a method of measuring from an elemental analysis mapping image by an energy dispersive X-ray spectrometer (EDS), and a method of measuring from a cross-sectional observation image by an optical microscope, scanning electron microscope (SEM), or transmission electron microscope (TEM). Note that the major axis of the dispersed phase of the second thermosetting resin is a line segment passing through the two most distant points on an outer periphery of the dispersed phase of the second thermosetting resin, among straight lines passing through the inside of the dispersed phase of the second thermosetting

resin confirmed in the cross-sectional observation image, and is represented by an average length measured for at least 20 randomly selected dispersed phases.

In the prepreg according to the embodiment of the present invention, in a thickness direction cross section, a volume ratio of the dispersed phase of the thermosetting resin contained in the thermoplastic resin layer may be 1 volume% or more, preferably 10 volume% or more, and more preferably 15 volume% or more with respect to 100 volume% of the thermoplastic resin layer in the reinforcing fiber group, from the viewpoint of more effectively preventing the flowing of the thermoplastic resin layer under a high temperature condition during molding or welding.

The above volume ratio (volume%) can be obtained by using a known method of observing a cross section perpendicular to the fiber direction of the prepreg. Examples of the method include a method of measuring from a cross-sectional image acquired by using an X-ray CT, a method of measuring from an elemental analysis mapping image by an energy dispersive X-ray spectrometer (EDS), and a method of measuring from a cross-sectional observation image by an optical microscope, scanning electron microscope (SEM), or transmission electron microscope (TEM).

Rather than evenly distributed in the thermoplastic layer, the dispersed phase of the second thermosetting resin is preferably unevenly distributed in the thermoplastic resin layer near the interface between the thermosetting resin layer and the thermoplastic resin layer, from the viewpoint of being able to perform welding with a second member with higher quality.

Specifically, in the thickness direction cross section of the prepreg, the sum of the volume ratio of the reinforcing fibers contained in the thermoplastic resin layer and the volume ratio of the second thermosetting resin is preferably 10 volume% or more, more preferably 10 volume% or more and 90 volume% or less, and still more preferably 20 volume% or more and 70 volume% or less, with respect to 100 volume% of a region of 50 μm from the interface between the thermoplastic resin layer and the thermosetting resin layer toward a surface of the thermoplastic resin layer in the thickness direction cross section. By setting the sum of the volume ratios in the more preferable range, the flowing of the thermoplastic resin layer can be more effectively prevented under a high temperature condition during molding or welding.

(Interface between Thermosetting Resin Layer and Thermoplastic Resin Layer)

In the prepreg according to the embodiment of the present invention, the interface between the thermosetting resin layer and the thermoplastic resin layer is positioned inside the reinforcing fiber group.

A shape of the interface is preferably an uneven shape from the viewpoint of further increasing mechanical bonding strength. A method for confirming the uneven shape of the interface is not particularly limited, and the uneven shape of the interface can be confirmed by observing a cross section perpendicular to the fiber direction of the prepreg. A more preferable interface shape is described below. A cross-sectional observation surface of the prepreg will be described with reference to FIG. 2.

For example, as illustrated in FIG. 2, a cross-sectional observation surface 8 is a cross section obtained by, for example, cutting the prepreg 5 perpendicularly to the prepreg plane (in the thickness direction of the prepreg) from a direction of an angle different from 90 degrees whether clockwise or counterclockwise with respect to a fiber direction 6 of the reinforcing fiber group 12 contained in the thermosetting resin layer and the thermoplastic resin layer in the prepreg 5.

Here, a known method can be used as a method for measuring a cross-sectional curve. Examples of the method include a method of measuring from a cross-sectional image acquired by using an X-ray CT after curing the prepreg, a method of measuring from an elemental analysis mapping image by an energy dispersive X-ray spectrometer (EDS), and a method of measuring from a cross-sectional observation image by an optical microscope, scanning electron microscope (SEM), or transmission electron microscope (TEM). In observation, the thermosetting resin layer and/or the thermoplastic resin layer may be dyed to adjust a contrast. An example of the method for measuring the cross-sectional curve is described by using FIG. 3.

In an observation image 9 illustrated in FIG. 3, the thermosetting resin layer 2 is in close contact with the thermoplastic resin layer 3, which is illustrated as an interface 10 in the observation image 9. The interface 10 is in contact with a plurality of reinforcing fibers. Using a surface 100 of the observation image 9 on the thermoplastic resin layer 3 side as a reference line, vertical baselines 120 are drawn at an interval of 10 μm from the thermoplastic resin layer 3 toward the thermosetting resin layer 2. A line obtained by plotting points where the vertical baselines drawn from the reference line intersect the thermosetting resin layer 2 for the first time and then connecting the plotted points is defined as a cross-sectional curve 130. It can be confirmed that the cross-sectional curve 130 has an uneven shape with respect to the reference line.

An average thickness of the entire prepreg is not particularly limited, and is preferably 50 μm or more and 400 μm or less from the viewpoint of productivity. When the average thickness of the entire prepreg is taken as 100%, an average thickness ratio of the thermoplastic resin layer is preferably 2% or more and 60% or less, and more preferably 5% or more and 30% or less from the viewpoint of prepreg drapeability and handling ability.

Examples of a method for measuring the average thickness of the entire prepreg and an average thickness of the thermoplastic resin layer include a method of observing the cross section of the prepreg with an optical microscope, determining 10 measurement positions at an equal interval in each image of randomly selected 10 captured images, and assuming average values of the measurement data for a total of 100 points as the average thickness of the entire prepreg and the average thickness of the thermoplastic resin layer.

In the prepreg according to the embodiment of the present invention, an impregnation ratio of the thermosetting resin and the thermoplastic resin (hereinafter may simply and collectively be referred to as resin) to the reinforcing fiber group is preferably 80% or more, more preferably 85% or more, and still more preferably 90% or more.

Here, the impregnation ratio is a ratio of how much the resin is impregnated in the reinforcing fiber group forming the prepreg. The impregnation ratio can be obtained by measuring by a specific method a ratio of portions of the resin not impregnated. A higher impregnation ratio means fewer voids in the prepreg, and a higher impregnation ratio is preferable from the viewpoint of improving surface appearance and mechanical properties of the obtained molded product.

Examples of the method for measuring the impregnation ratio include a method of obtaining the impregnation ratio by the following Equation (1), assuming a total cross-sectional area of the prepreg including the voids in the prepreg as A0 and a cross-sectional area of the voids as A1 in observation of the cross section perpendicular to the fiber direction of the prepreg.

$$\text{Impregnation ratio (\%)} = (A0-A1) \times 100/A0 \qquad (1)$$

Details of each element constituting the prepreg of the present invention will be described below.

<Reinforcing Fiber Group>

The reinforcing fiber group is an assembly (fiber bundle) of the reinforcing fibers, and may be either continuous fibers or discontinuous fibers, and can be appropriately selected from a unidirectionally arranged form, a lamination form thereof, a woven form, and the like. From the viewpoint of obtaining a lightweight and highly durable fiber-reinforced plastic, it is preferable that the reinforcing fibers are unidirectionally arranged continuous fibers or a woven fabric.

Such a fiber bundle may be made of the same reinforcing fibers or may be made of different reinforcing fibers. The number of fibers constituting the reinforcing fiber bundle is not particularly limited, and can be exemplified as 300 to 60,000, and from the viewpoint of productivity, the number is preferably 300 to 48,000, and more preferably 1,000 to 24,000.

A type of the reinforcing fibers that constitute the reinforcing fiber group is not particularly limited, and examples thereof include carbon fibers, glass fibers, aramid fibers, alumina fibers, silicon carbide fibers, boron fibers, metal fibers, natural fibers, and mineral fibers, in which these fibers may be used singly or in combination of two or more.

Among them, from the viewpoint of improving specific strength and specific rigidity and reducing weight, carbon fibers such as polyacrylonitrile (PAN), pitch, and rayon fibers are preferably used. From the viewpoint of improving economic efficiency of the obtained prepreg, glass fibers can be preferably used, and it is particularly preferable to use carbon fibers and glass fibers together from the viewpoint of balance between mechanical properties and economic efficiency. Furthermore, aramid fibers can be preferably used from the viewpoint of improving impact absorption and formability of the obtained prepreg, and it is particularly preferable to use carbon fibers and aramid fibers in combination from the viewpoint of balance between mechanical properties and impact absorption. From the viewpoint of improving conductivity of the obtained prepreg, reinforcing fibers coated with metal such as nickel, copper, or ytterbium, or pitch-based carbon fibers may be used.

The reinforcing fibers constituting the reinforcing fiber group are preferably surface-treated with a sizing agent from the viewpoint of improving mechanical properties. Examples of the sizing agent include polyfunctional epoxy resins, urethane resins, acrylic acid polymers, polyhydric alcohols, polyethyleneimine, and ethylene oxide adducts of aliphatic alcohols. Specifically, examples thereof include polyglycidyl ether of aliphatic polyhydric alcohols such as glycerol triglycidyl ether, diglycerol polyglycidyl ether, polyglycerol polyglycidyl ether, sorbitol polyglycidyl ether, arabitol polyglycidyl ether, trimethylolpropane triglycidyl ether, and pentaerythritol polyglycidyl ether; polyacrylic acid, a copolymer of acrylic acid and methacrylic acid, a copolymer of acrylic acid and maleic acid, and a mixture of two or more of these; polyvinyl alcohol; glycerol; diglycerol; polyglycerol; sorbitol; arabitol; trimethylolpropane; pentaerythritol; polyethyleneimine containing more amino groups in one molecule; and polyoxyethylene oleyl ether. Among these, glycerol triglycidyl ether, diglycerol polyglycidyl ether, and polyglycerol polyglycidyl ether are preferably used since they contain many highly reactive epoxy groups in one molecule, have high water solubility, and are easy to apply.

The reinforcing fiber having a surface free energy of 10 $mJ/m^2$ to 50 $mJ/m^2$ as measured by the Wilhelmy method is preferably used. By controlling the surface free energy within this range, the compatibility with both the thermosetting resin layer and the thermoplastic resin layer is enhanced, aggregation among the reinforcing fibers is

prevented, and dispersibility within the layers is improved. As a result, the dispersed phase of the second thermosetting resin is more stably formed in the thermoplastic resin layer. The reinforcing fibers exhibit high affinity with the thermosetting resin layer and the thermoplastic resin layer, and exhibit high joining strength at the interface between the thermosetting resin and the thermoplastic resin where the reinforcing fibers straddle. The surface free energy of the reinforcing fiber is preferably 15 $mJ/m^2$ to 40 $mJ/m^2$, and more preferably 18 $mJ/m^2$ to 35 $mJ/m^2$.

Examples of a method for controlling the surface free energy of the reinforcing fibers include a method of oxidizing the surface to adjust the amount of oxygen-containing functional groups such as carboxyl groups and hydroxyl groups, and a method of attaching a single or a plurality of compounds to the surface. In the case where a plurality of compounds is attached to the surface, those having a high surface free energy and those having a low surface free energy may be mixed and attached. A method for calculating the surface free energy of the reinforcing fibers will be described below. The surface free energy can be calculated by a method of measuring contact angles of the reinforcing fibers with respect to three solvents (purified water, ethylene glycol, tricresyl phosphate) and then calculating the surface free energy by using the Owens equation for approximation. A procedure thereof is described below, but the measuring equipment and detailed method are not necessarily limited to the followings.

Using DCAT11 manufactured by Data Physics, first, a single fiber is taken out from the reinforcing fiber bundle, cut into eight pieces with a length of 12 ± 2 mm, and then attached in parallel with each other to a dedicated holder FH12 (a flat plate coated with an adhesive substance on a surface thereof) with an interval of 2 mm to 3 mm between each two single fibers. Then, ends of the single fibers are trimmed and set on DCAT11 of the holder. In the measurement, a cell containing each solvent is brought close to lower ends of the eight single fibers at a speed of 0.2 mm/s, and the single fibers are immersed up to 5 mm from tips thereof. Then, the single fibers are pulled up at a speed of 0.2 mm/s. This operation is repeated four times or more. A force F applied to each single fiber while immersed in the liquid is measured by using an electronic balance. Using this value, a contact angle θ is calculated by the following equation.

$$\cos\theta = (\text{force F (mN) applied to eight single fibers})/(8\ (\text{number of single fibers}) \times \text{circumference (m) of single fiber} \times \text{surface tension of solvent } (mJ/m^2))$$

The measurement is performed on single fibers extracted from three different positions of the reinforcing fiber bundle. That is, an average value of contact angles for a total of 24 single fibers is obtained for one reinforcing fiber bundle.

A surface free energy $\gamma_f$ of the reinforcing fiber is calculated as the sum of a polar component $\gamma^p_f$ of the surface free energy, and a non-polar component $\gamma^d_f$ of the surface free energy.

The polar component $\gamma^p_f$ of the surface free energy is obtained by substituting a surface tension component and the contact angle of each liquid into the Owens equation for approximation shown in the following equation (an equation including polar and non-polar components of the surface tension inherent in each solvent and the contact angle θ), plotting on X and Y, and squaring a slope a when linearly approximated by the least square method. The non-polar component $\gamma^d_f$ of the surface free energy is obtained by squaring an intercept b. The surface free energy $\gamma_f$ of the reinforcing fiber is the sum of a square of the slope a and a square of the intercept b.

$$Y = a \cdot X + b$$

X = √(polar component ($mJ/m^2$) of surface tension of solvent)/√(non-polar component ($mJ/m^2$) of surface tension of solvent)
Y= (1 + cos θ)·(polar component ($mJ/m^2$) of surface tension of solvent)/2√(non-polar component ($mJ/m^2$) of surface tension of solvent)
Polar component $\gamma^p_f$ of surface free energy of reinforcing fiber = $a^2$
Non-polar component $\gamma^d_f$ of surface free energy of reinforcing fiber = $b^2$
Total surface free energy $\gamma_f = a^2 + b^2$.

The polar and non-polar components of the surface tension of each solvent are as follows.

·Purified water
Surface tension 72.8 $mJ/m^2$, polar component 51.0 $mJ/m^2$, non-polar component 21.8 ($mJ/m^2$)
·Ethylene glycol
Surface tension 48.0 $mJ/m^2$, polar component 19.0 $mJ/m^2$, non-polar component 29.0 ($mJ/m^2$)
·Tricresol phosphate
Surface tension 40.9 $mJ/m^2$, polar component 1.7 $mJ/m^2$, non-polar component 39.2 ($mJ/m^2$).

The reinforcing fiber bundle preferably has a strand tensile strength of 3.5 GPa or more as measured according to a resin-impregnated strand test method of JIS R7608 (2007), since a prepreg having excellent joining strength in addition to tensile strength can be obtained, and the strand tensile strength is more preferably 4.0 GPa or more. The joining strength referred to here refers to a tensile shear joining strength determined according to ISO 4587 (1995).

The prepreg according to the embodiment of the present invention preferably has a reinforcing fiber content of 30 g/$m^2$ to 2,000 g/$m^2$, and more preferably 50 g/$m^2$ to 300 g/$m^2$ or less per unit area from the viewpoint of handling ability and economy in lamination.

A mass content of the reinforcing fibers constituting the reinforcing fiber group in the prepreg is preferably 30 mass% to 90 mass%, more preferably 35 mass% to 85 mass%, and still more preferably 40 mass% to 80 mass%. In the case where the mass content of the reinforcing fibers is within the preferred ranges, it is easier to obtain a molded product with superior specific strength and specific elastic modulus.

<Thermosetting Resin Layer>

The thermosetting resin layer can be formed by curing a thermosetting resin composition containing the first thermosetting resin as a main component. The first thermosetting resin may contain additives and the like as necessary.

A type of the first thermosetting resin is not particularly limited, and examples thereof include unsaturated polyester resins, vinyl ester resins, epoxy resins, phenol resins, urea resins, melamine resins, polyimide resins, cyanate ester resins, bismaleimide resins, benzoxazine resins, and copolymers or modified products thereof, and resins in which at least two of these resins are blended. An elastomer or rubber component may be added to the first thermosetting resin composition to improve impact resistance.

Among these resins, epoxy resins are preferable because of their excellent mechanical properties, heat resistance, and adhesiveness to reinforcing fibers.

Examples of a main agent of the epoxy resins can include bisphenol epoxy resins such as bisphenol A epoxy resin, bisphenol F epoxy resin, bisphenol AD epoxy resin, and bisphenol S epoxy resin, brominated epoxy resins such as tetrabromobisphenol A diglycidyl ether, epoxy resins having a biphenyl skeleton, epoxy resins having a naphthalene skeleton, epoxy resins having a dicyclopentadiene skeleton, novolak epoxy resins such as phenol novolak epoxy resins and cresol novolak epoxy resins, glycidylamine epoxy resins such as N,N,O-triglycidyl-m-aminophenol, N,N,O-triglycidyl-p-aminophenol, N,N,O-triglycidyl-4-amino-3-methylphenol, N,N,N',N'-tetraglycidyl-4,4'-methylenedianiline, N,N,N',N'-tetraglycidyl-2,2'-diethyl-4,4'-methylenedianiline, N,N,N',N'-tetraglycidyl-m-xylylenediamine, N,N-diglycidylaniline, and N,N-diglycidyl-o-toluidine, resorcinol diglycidyl ether, and triglycidyl isocyanurate.

The first thermosetting resin composition may contain a curing agent. Examples of the curing agent in the first thermosetting resin composition include dicyandiamide, aromatic amine compounds, phenol novolak resins, cresol novolak resins, polyphenol compounds, imidazole derivatives, tetramethylguanidine, thiourea-added amines, carboxylic acid hydrazides, carboxylic acid amide, and polymercaptan.

These curing agents are preferably 0.8 to 1.2 equivalents of the number of reactive functional groups in the first thermosetting resin.

Furthermore, depending on a use thereof, the first thermosetting resin composition may be added with fillers such as mica, talc, kaolin, hydrotalcite, sericite, bentonite, xonotlite, sepiolite, smectite, montmorillonite, wollastonite, silica, calcium carbonate, glass beads, glass flakes, glass microballoons, clay, molybdenum disulfide, titanium oxide, zinc oxide, antimony oxide, calcium polyphosphate, graphite, barium sulfate, magnesium sulfate, zinc borate, calcium borate, aluminum borate whiskers, potassium titanate whiskers, and polymeric compounds; conductivity-enhancing agents such as metals, metal oxides, carbon black, and graphite powder; halogenated flame retardants such as brominated resins; antimony-based flame retardants such as antimony trioxide and antimony pentoxide; phosphorus-based flame retardants such as ammonium polyphosphate, aromatic phosphates, and red phosphorus; organic acid metal salt-based flame retardants such as metal borate, metal carboxylate, and aromatic sulfonimide metal salt; inorganic flame retardants such as zinc borate, zinc, zinc oxide, and zirconium compounds; nitrogen-based flame retardants such as cyanuric acid, isocyanuric acid, melamine, melamine cyanurate, melamine phosphate, and nitrogenated guanidine; fluorinated flame retardants such as PTFE; silicone-based flame retardants such as polyorganosiloxane; metal hydroxide-based flame retardants such as aluminum hydroxide and magnesium hydroxide; other flame retardants; flame retardant aids such as cadmium oxide, zinc oxide, cuprous oxide, cupric oxide, ferrous oxide, ferric oxide, cobalt oxide, manganese oxide, molybdenum oxide, tin oxide, and titanium oxide; pigments; dyes; lubricants; release agents; compatibilizers; dispersants; nucleating agents such as mica, talc, and kaolin; plasticizers such as phosphate esters; heat stabilizers; antioxidants; anti-coloring agents; UV absorbers; fluidity modifiers; foaming agents; antibacterial agents; damping agents; deodorants; slidability modifiers; antistatic agents such as polyether ester amides; and the like. Particularly, in applications such as electrical and electronic equipment, automobiles, and aircraft, flame retardancy may be required, and phosphorus-based flame retardants, nitrogen-based flame retardants, and inorganic flame retardants are preferably added.

An amount of the flame retardant is preferably 1 part by mass to 20 parts by mass and more preferably 1 part

by mass to 15 parts by mass, per 100 parts by mass of the first thermosetting resin composition, so as to exhibit flame retardant effect and maintain a good balance between properties of the resin used such as the mechanical properties and resin fluidity during molding.

A volume of the reinforcing fibers contained in the thermosetting resin layer is preferably 50% to 99% and more preferably 75% to 95%, of a total volume of the reinforcing fibers contained in the entire prepreg, from the viewpoint of balance between the mechanical properties of the obtained molded product and weldability with the second member.

Examples of a method for measuring the amount of the reinforcing fibers in the thermosetting resin layer include a method of obtaining the ratio [%] by performing segmentation analysis on an X-ray CT image of a small piece of a fiber-reinforced plastic obtained by curing the prepreg and then dividing a volume of the reinforcing fibers present in the thermosetting resin layer by a total volume of the reinforcing fibers contained in the small piece, and a method of obtaining the ratio [%] by dividing an area of the reinforcing fibers present in the thermosetting resin layer by an area of the reinforcing fibers contained in the entire small piece in a cross-sectional observation photograph of the small piece obtained by an optical microscope, a scanning electron microscope (SEM), or a transmission electron microscope (TEM). In observation, the thermosetting resin layer and/or the thermoplastic resin layer may be dyed to adjust a contrast.

<Thermoplastic Resin Layer>

The thermoplastic resin layer is not particularly limited except that it contains the dispersed phase of the second thermosetting resin, and can be formed by using a thermoplastic resin composition containing a thermoplastic resin as a main component. The thermoplastic resin composition may contain additives and the like as necessary.

A type of the thermoplastic resin that is a main component of the thermoplastic resin layer is not particularly limited, and examples thereof include crystalline resins such as "polyesters such as polyethylene terephthalate (PET), polybutylene terephthalate (PBT), polytrimethylene terephthalate (PTT), polyethylene naphthalate (PEN), and liquid crystal polyesters, polyolefins such as polyethylene (PE), polypropylene (PP), and polybutylene, polyarylene sulfides such as polyoxymethylene (POM), polyamide (PA), and polyphenylene sulfide (PPS), polyketone (PK), polyetherketone (PEK), polyetheretherketone (PEEK), polyaryletherketone (PAEK), polyetherketoneketone (PEKK), polyethernitrile (PEN), and fluorinated resins such as polytetrafluoroethylene"; amorphous resins such as "polycarbonate (PC), polymethyl methacrylate (PMMA), polyvinyl chloride (PVC), polyphenylene ether (PPE), polyimide (PI), polyamideimide (PAI), polyetherimide (PEI), polysulfone (PSU), polyethersulfone, and polyarylate (PAR) in addition to styrene resins"; phenolic resins; phenoxy resins; thermoplastic elastomers of polystyrene, polyolefin, polyurethane, polyester, polyamide, polybutadiene, polyisoprene, fluorine resins, acrylonitrile, and the like; and copolymers and modified products thereof.

Among these resins, polyolefin is preferable from the viewpoint of lightweight of the obtained prepreg. Polyamide is preferable from the viewpoint of strength. From the viewpoint of heat resistance, polyarylene sulfide such as polyphenylene sulfide (PPS), polyetheretherketone (PEEK), polyaryletherketone (PAEK), and polyetherketoneketone (PEKK) are preferred.

Furthermore, depending on a use thereof, the thermoplastic resin composition may be added with fillers such as mica, talc, kaolin, hydrotalcite, sericite, bentonite, xonotlite, sepiolite, smectite, montmorillonite, wollastonite, silica, calcium carbonate, glass beads, glass flakes, glass microballoons, clay, molybdenum disulfide, titanium oxide, zinc oxide, antimony oxide, calcium polyphosphate, graphite, barium sulfate, magnesium sulfate, zinc borate, calcium borate, aluminum borate whiskers, potassium titanate whiskers, and polymeric compounds; conductivity-enhancing agents such as metals, metal oxides, carbon black, and graphite powder; halogenated flame retardants such as brominated resins; antimony-based flame retardants such as antimony trioxide and antimony pentoxide; phosphorus-based flame retardants such as ammonium polyphosphate, aromatic phosphates, and red phosphorus; organic acid metal salt-based flame retardants such as metal borate, metal carboxylate, and aromatic sulfonimide metal salt; inorganic flame retardants such as zinc borate, zinc, zinc oxide, and zirconium compounds; nitrogen-based flame retardants such as cyanuric acid, isocyanuric acid, melamine, melamine cyanurate, melamine phosphate, and nitrogenated guanidine; fluorinated flame retardants such as PTFE; silicone-based flame retardants such as polyorganosiloxane; metal hydroxide-based flame retardants such as aluminum hydroxide and magnesium hydroxide; other flame retardants; flame retardant aids such as cadmium oxide, zinc oxide, cuprous oxide, cupric oxide, ferrous oxide, ferric oxide, cobalt oxide, manganese oxide, molybdenum oxide, tin oxide, and titanium oxide; pigments; dyes; lubricants; release agents; compatibilizers; dispersants; nucleating agents such as mica, talc, and kaolin; plasticizers such as phosphate esters; heat stabilizers; antioxidants; anti-coloring agents; UV absorbers; fluidity modifiers; foaming agents; antibacterial agents; damping agents; deodorants; slidability modifiers; antistatic agents such as polyether ester amides; and the like. Particularly, in applications such as electrical and electronic equipment, automobiles, and aircraft, flame retardancy may be required, and phosphorus-based flame retardants, nitrogen-based flame retardants, and inorganic flame retardants are preferably added.

An amount of the flame retardant is preferably 1 part by mass to 20 parts by mass and more preferably 1 part by mass to 15 parts by mass per 100 parts by mass of the thermoplastic resin composition, so as to exhibit flame retardant effect and maintain a good balance between properties of the resin used such as the mechanical properties

and resin fluidity during molding.

A basis weight of the thermoplastic resin layer in the prepreg is preferably 10 g/$m^2$ or more and 500 g/$m^2$ or less, and more preferably 20 g/$m^2$ or more and 200 g/$m^2$ or less, from the viewpoint of improving quality by ensuring an amount of resin suitable for welding with the second member.

Here, the basis weight refers to a mass (g) of the thermoplastic resin layer contained per 1 $m^2$ of the prepreg.

The thermoplastic resin layer may exist as a part of the surface layer of the fiber-reinforced plastic. The thermoplastic resin layer present on the surface layer of the prepreg also forms a thermoplastic resin layer in the molded product formed by molding the prepreg, and integration with the second member can be implemented by welding through this thermoplastic resin layer. In the present embodiment, the portion of the thermoplastic resin layer can be minimized, and productivity of the prepreg and the fiber-reinforced plastic can be improved.

<Second Thermosetting Resin>

The second thermosetting resin contains a thermosetting resin that forms a dispersed phase without being dissolved in the thermoplastic resin and that can come into contact with the reinforcing fibers, as a main component. In order to improve adhesive strength without impairing toughness of the thermoplastic resin layer, it is preferable to select a thermosetting resin having high toughness. Additives and the like may be included depending on a use of the fiber-reinforced plastic.

Specifically, resins similar to the first thermosetting resin can be exemplified.

It is preferable that the second thermosetting resin and the first thermosetting resin are the same type of resin from the viewpoint of ease of setting conditions in molding the prepreg and welding the molded product, and is more preferably the two are the same resin. Note that in the present invention, "the same type" means that the main components excluding additives and the like are the same.

Similarly, a cured product of the second thermosetting resin is preferably of the same type as a cured product of the first thermosetting resin composition forming the thermosetting resin layer, and it is more preferably that the two are the same.

Specific examples of a curing agent and additives that can be contained in the second thermosetting resin are the same as those of the curing agent and additives that can be contained in the first thermosetting resin layer, and preferred examples are also the same.

<Method for Manufacturing Prepreg>

Examples of a method for manufacturing the prepreg of the present invention include a method for manufacturing a prepreg, including a step of impregnating a precursor of the second thermosetting resin with one surface of a reinforcing fiber sheet constituting the reinforcing fiber group, and then impregnating a precursor of the thermoplastic resin layer with the reinforcing fiber sheet to form the dispersed phase of the second thermosetting resin contained in the thermoplastic resin layer, and a step of impregnating a precursor of the thermosetting resin layer with the other surface of the reinforcing fiber sheet to form the thermosetting resin layer.

Alternatively, exemplified is a method for manufacturing a prepreg, including a step of impregnating the precursor of the thermoplastic resin with one surface of the reinforcing fiber sheet constituting the reinforcing fiber group, and then impregnating the precursor of the thermosetting resin layer with the reinforcing fiber sheet while applying heat and pressure to an interface region between the thermoplastic resin and the thermosetting resin to enclose a part of the thermosetting resin in the thermoplastic resin layer, to thereby form the dispersed phase of the second thermosetting resin.

Exemplified is also a method for manufacturing a prepreg, including a step of impregnating the precursor of the thermosetting resin layer with both surfaces of the reinforcing fiber sheet constituting the reinforcing fiber group to form the thermosetting resin layer, and a step of softening or melting the precursor of the thermoplastic resin layer on at least one surface of the thermosetting resin layer and applying pressure to mix the precursor of the thermosetting resin layer and the precursor of the thermoplastic resin layer to form the dispersed phase of the second thermosetting resin contained in the thermoplastic resin layer.

Further, in this step, when the precursor of the thermosetting resin layer and the precursor of the thermoplastic resin layer are mixed, a shear force can be applied, for example, by adding pressure and vibrating. In this way, the mixing of the thermoplastic resin layer and the thermosetting resin layer is promoted, and formation of the dispersed phase of the thermosetting resin is promoted. This step is preferably adopted from the viewpoint that in addition to the effects of the present invention, the weldability of the fiber-reinforced plastic can be improved since the interface between the thermoplastic resin layer and the thermosetting resin layer becomes complicated. There is no restriction on the vibrating method as long as the shear force can be applied to each of the thermoplastic resin layer, thermosetting resin layer, and reinforcing fibers, and examples of a mechanism for implementing the vibrating include an ultrasonic vibrator and a device that performs cyclical motion, such as a fixed bar that performs reciprocating motion.

As a temperature for melting the precursor of the thermoplastic resin layer, in the case where the thermoplastic resin, which is the main component of the precursor of the thermoplastic resin layer, is crystalline, heating and pressure molding are preferably performed at a temperature of + 30°C above a melting point thereof. In the case of amorphous, heating and pressure molding are preferably performed at a temperature of + 30°C above a glass transition temperature thereof.

Examples of a method for forming the dispersed phase of the second thermosetting resin in contact with the reinforcing fibers, which is contained in the thermoplastic resin layer of the prepreg include the use of any of the following methods (i) to (v). A plurality of these steps may be combined, and the method is not limited to these methods.

(i) A step of containing, in the precursor of the thermoplastic resin layer, a precursor of the dispersed phase of the second thermosetting resin to be contained in the thermoplastic resin layer.
(ii) A step of applying a precursor of the dispersed phase of the second thermosetting resin to be contained in the thermoplastic resin layer to an intermediate of the prepreg obtained by impregnating the precursor of the thermosetting resin layer with the reinforcing fiber sheet constituting the reinforcing fiber group, and then impregnating the precursor of the thermoplastic resin layer.
(iii) A step of applying a precursor of the dispersed phase of the second thermosetting resin to be contained in the thermoplastic resin layer to an intermediate of the prepreg obtained by impregnating the precursor of the thermoplastic resin layer with the reinforcing fiber group, and then containing the dispersed phase in the thermoplastic resin layer.
(iv) A step of impregnating the precursor of the thermoplastic resin layer with an intermediate of the prepreg obtained by impregnating the precursor of the thermosetting resin with the reinforcing fiber sheet constituting the reinforcing fiber group, while applying pressure to the thermoplastic resin to contain the thermosetting resin into the thermoplastic resin layer to form the dispersed phase.
(v) A step of applying a shear force, by a vibrating device or the like, to an intermediate of the prepreg obtained by impregnating the precursor of the thermoplastic resin layer and the precursor of the thermosetting resin layer with the reinforcing fiber group, to form the dispersed phase of the thermosetting resin contained in the thermoplastic resin layer.

<Precursor of Thermosetting Resin Layer>

The precursor of the thermosetting resin layer is a composition that is to be impregnated with the reinforcing fiber group to form the thermosetting resin layer. A method for impregnating the precursor of the thermosetting resin layer with the reinforcing fiber group is not particularly limited, and examples thereof include a method of applying heat and pressure with a heat roller to soften or melt and impregnate.

A form of the precursor of the thermosetting resin layer is not limited, and examples thereof include a liquid form, a sheet form, a non-woven fabric form, and a particulate form, and from the viewpoint of being uniformly impregnated with the reinforcing fiber group, the sheet form is preferable.

<Precursor of Thermoplastic Resin Layer>

The precursor of the thermoplastic resin layer is a composition (thermoplastic resin composition) that is to be impregnated with the reinforcing fiber group to form the thermoplastic resin layer. A method for impregnating the precursor of the thermoplastic resin layer with the reinforcing fiber group is not particularly limited, and examples thereof include a method of welding and applying heat and pressure with a heat roller and then impregnating.

A form of the precursor of the thermoplastic resin layer is not limited, and examples thereof include a liquid form, a sheet form, a non-woven fabric form, and a particulate form, and from the viewpoint of being uniformly impregnated with the reinforcing fiber group, the sheet form and the non-woven fabric form is preferable.

The precursor of the thermoplastic resin layer may be disposed on a part of the surface layer of the prepreg from the viewpoint of ensuring stable thermal adhesion. That is, the thermoplastic resin layer may be disposed on a portion that will be a joint surface with the second member when the prepreg is molded to form a molded product. From the viewpoint of ensuring a margin for the joint surface, the thermoplastic resin layer is preferably disposed in an area of 50% or more and more preferably 80% or more of the surface layer.

<Precursor of Dispersed Phase of Second Thermosetting Resin>

The precursor of the dispersed phase of the second thermosetting resin can be used, for example, in the form of liquid, sheet, non-woven fabric, and particles, and from the viewpoint of forming the dispersed phase in the thermoplastic resin layer, the precursor is preferably in the form of particles.

When the precursor of the dispersed phase of the second thermosetting resin is contained in advance in the

precursor of the thermoplastic resin layer, that is, in the case where the above-described step (i) is performed, from the viewpoint of process stability of the prepreg, the precursor of the dispersed phase of the second thermosetting resin is preferably in a range of 10 parts by mass to 40 parts by mass, more preferably in a range of 15 parts by mass to 40 parts by mass, still more preferably in a range of 25 parts by mass to 40 parts by mass with respect to 100 parts by mass of the precursor of the thermoplastic resin layer.

<Fiber-reinforced Plastic>

A fiber-reinforced plastic, which is another aspect of the present invention, includes:

a reinforcing fiber group containing reinforcing fibers;
a thermosetting resin layer containing a first thermosetting resin; and
a thermoplastic resin layer, in which
the thermoplastic resin layer is provided as a surface layer of the fiber-reinforced plastic,
an interface between the thermoplastic resin layer and the thermosetting resin layer is positioned inside the reinforcing fiber group, and
the thermoplastic resin layer contains a dispersed phase of a second thermosetting resin.

Examples of an embodiment of the fiber-reinforced plastic according to the present invention include a molded body obtained by molding the prepreg according to the present invention, that is, an embodiment obtained by curing the first and second thermosetting resins constituting the prepreg.

The fiber-reinforced plastic may be obtained by molding the prepreg alone, by laminating a plurality of prepregs, and by laminating the prepreg with another material. The structure of the laminating is not particularly limited except that the prepreg according to the present invention is placed on one of the outermost laminate units corresponding to a surface of a molded product, and prepregs, films, sheets, non-woven fabrics, porous bodies, metals, and the like can be laminated depending on use of the molded product.

FIG. 1 is a schematic diagram of a cross section perpendicular to a plane obtained by cutting off a part of the surface of the fiber-reinforced plastic according to the embodiment of the present invention, that is, FIG. 1 can illustrate the present invention by observing at least one cross section of the fiber-reinforced plastic.

The surface of the fiber-reinforced plastic according to the embodiment of the present invention can be explained by using FIG. 1 in the same manner as the prepreg according to the embodiment of the present invention. That is, the fiber-reinforced plastic according to the embodiment of the present invention includes the reinforcing fiber group 12 containing the reinforcing fibers 1 and 14, the thermosetting resin layer 2 containing the first thermosetting resin, and the thermoplastic resin layer 3. A surface layer of the fiber-reinforced plastic is the thermoplastic resin layer 3. An interface between the thermoplastic resin layer 3 and the thermosetting resin layer 2 is positioned inside the reinforcing fiber group 12. The thermoplastic resin layer 3 contains the dispersed phase 4 of the second thermosetting resin.

Similar to the prepreg according to the present invention, the dispersed phase 4 in the fiber-reinforced plastic according to the embodiment of the present invention refers to a partially independent cured region of the thermosetting resin in the thermoplastic resin layer observed in a cross section perpendicular to the plane of the fiber-reinforced plastic. That is, in the molding of the prepreg according to the present invention, since the dispersed phase 4 binds the reinforcing fibers, the flow of the thermoplastic resin layer is prevented, and since only the curing reaction of the thermosetting resin is promoted, the reinforcing fibers, thermoplastic resin layer, thermosetting resin layer, and second thermosetting resin layer in the description of the prepreg can be similarly maintained.

Therefore, the fiber-reinforced plastic according to the embodiment of the present invention can be regarded as that the plurality of reinforcing fibers are partially bound to each other by the dispersed phase of the second thermosetting resin being in contact with the plurality of reinforcing fibers contained in the thermoplastic resin layer. Thus, the fiber-reinforced plastic according to the embodiment can contribute to improvement in quality, such as reducing alignment disorder and movement of the reinforcing fibers, preventing excessive outflow of the thermoplastic resin layer, and ensuring a thickness of the thermoplastic resin layer that becomes an adhesive layer, even when the thermoplastic resin layer is in a fluid state due to a high temperature condition when welding a molded product.

Similarly, the shape of the dispersed phase of the second thermosetting resin is not particularly limited as long as it forms an independent region. For example, in cross-sectional observation of the dispersed phase of the second thermosetting resin contained in the thermoplastic resin layer in a cross section perpendicular to the plane, it may be fibrous, circular, elliptical, rectangular, or a complex shape with unevenness.

Similarly, the length of the major axis of the dispersed phase of the second thermosetting resin is preferably 50 nm or more, more preferably 100 nm or more, still more preferably 300 nm or more, and even more preferably 1 $\mu$m or more. By setting the length of the major axis of the dispersed phase of the second thermosetting resin within such a range, it is possible to effectively prevent flowing of the thermoplastic resin layer under a high temperature condition

during welding, and to ensure a higher quality.

Similarly, in the fiber-reinforced plastic according to the embodiment of the present invention, in a thickness direction cross section, a volume ratio of the dispersed phase of the second thermosetting resin contained in the thermoplastic resin layer may be 1 volume% or more, preferably 10 volume% or more, and more preferably 15 volume% or more with respect to 100 volume% of the thermoplastic resin layer in the reinforcing fiber group.

The volume ratio of the dispersed phase of the second thermosetting resin with respect to 100 volume% of the reinforcing fibers contained in the thermoplastic resin layer is preferably 3 volume% or more and 50 volume% or less from the viewpoint of balance between the effect of preventing the flowing of the thermoplastic resin during welding and not impairing high toughness of the thermoplastic resin.

Similarly, rather than evenly distributed in the thermosetting resin layer, the dispersed phase of the second thermosetting resin is preferably unevenly distributed in the thermoplastic resin layer near the interface between the thermosetting resin layer and the thermoplastic resin layer.

Specifically, in the thickness direction cross section of the fiber-reinforced plastic, the sum of the volume ratio of the reinforcing fibers contained in the thermoplastic resin layer and the volume ratio of the second thermosetting resin is preferably 10 volume% or more, and more preferably 30 volume% or more, with respect to 100 volume% of a region of 50 μm from the interface between the thermoplastic resin layer and the thermosetting resin layer toward a surface of the thermoplastic resin layer in the thickness direction cross section. The sum of volume ratios is preferably 90 weight% or less, and more preferably 70 volume% or less.

(Interface between Thermosetting Resin Layer and Thermoplastic Resin Layer)

Similarly, in the fiber-reinforced plastic according to the embodiment of the present invention, the interface between the thermosetting resin layer and the thermoplastic resin layer is positioned inside the reinforcing fiber group.

A range of each element constituting the fiber-reinforced plastic according to the embodiment of the present invention, that is, the reinforcing fiber or reinforcing fiber group, the thermoplastic resin, the thermosetting resin, and the second thermosetting resin, is the same as the range described above for the prepreg of the present invention, and preferred ranges thereof are also the same. Various observation methods and analysis methods are also the same as the specific examples described above for the prepreg of the present invention.

Here, in the fiber-reinforced plastic according to the embodiment of the present invention, the glass transition temperature of the second thermosetting resin is preferably 150°C or more, and is more preferably 180°C or more from the viewpoint of maintaining the binding of the plurality of fibers in the thermoplastic resin layer under a high temperature condition in welding with the second member. Examples of a method for analyzing the first thermosetting resin contained in the thermosetting resin layer and the second thermosetting resin include a method of analyzing from the glass transition temperature by a differential scanning calorimeter (DSC), a method of analyzing from an elemental analysis mapping image by an energy dispersive X-ray spectrometer (EDS), and a method of analyzing from an elastic modulus by a nanoindentation method.

The fiber-reinforced plastic according to the embodiment of the present invention is not limited to the example of molding the prepreg, which is one embodiment of the present invention, and can be preferably selected as long as the embodiment of the present invention can be implemented through process of prepreg autoclave molding, press molding, pultrusion molding, resin transfer (RTM) molding, or resin infusion (RI) molding.

The structure of the fiber-reinforced plastic according to the embodiment of the present invention is not particularly limited, and various structures such as a flat plate, a curved plate, an uneven structure, a hollow structure, and a sandwich structure can be selected according to a use thereof. In general, it is preferable to use prepreg for a flat plate structure that requires high mechanical properties, and it is preferable to use RTM molding if a complicated three-dimensional structure is required.

integrated Product>

An integrated product according to the embodiment of the present invention is an integrated product obtained by joining a first member made of the fiber-reinforced plastic according to the embodiment of the present invention and a second member made of another structural member through a thermoplastic resin layer disposed on a surface layer of the fiber-reinforced plastic.

In the integrated product according to the embodiment of the present invention, a distance t between the thermosetting resin layer of the fiber-reinforced plastic and the second member is greater than the length of the major axis of the dispersed phase of the second thermosetting resin contained in the thermoplastic resin layer, and is preferably 10 μm or more and 200 μm or less, and more preferably 30 μm or more and 100 μm or less, from the viewpoint of ensuring quality stability of bonding strength by welding.

A method for joining the first member and the second member is not limited, and examples thereof include

welding methods such as hot plate welding, vibration welding, ultrasonic welding, laser welding, resistance welding, induction welding, insert injection molding, and outsert injection welding.

The fiber-reinforced plastic and the integrated product according to the present invention are preferably used for aircraft structural members, windmill blades, automobile outer panels, computer applications such as IC trays and laptop computer cases, and even sports applications such as golf shafts and tennis rackets.

Examples

The present invention will be described in more detail below with reference to Examples. However, the scope of the present invention is not limited to these Examples. Unless otherwise noted, measurement of various properties was performed under an environment of a temperature of 23°C and a relative humidity of 50%.

<Reinforcing Fiber Bundle>

·Reinforcing fiber bundle 1

A copolymer containing polyacrylonitrile as a main component was subjected to spinning, baking treatment, and surface oxidation treatment to obtain a reinforcing fiber bundle 1 constituted by continuous carbon fibers with a total number of 24,000 single fibers, which was used to form a reinforcing fiber group. Properties of the reinforcing fiber bundle 1 were as follows.

Single fiber diameter: 7 μm
Density: 1.8 g/$cm^3$
Tensile strength: 4.2 GPa
Tensile modulus: 230 GPa
Surface free energy: 15 mJ/$m^2$

Reinforcing fiber bundle 2

The reinforcing fiber 1 was used as a base. Various sizing agent compounds were mixed with acetone to obtain solutions in which the respective compounds were uniformly dissolved in approximately 1 mass%. After applying each compound to the carbon fiber bundle by an immersion method, heat treatment was performed under 210°C for 90 seconds, and an amount of each compound adhered was adjusted to 0.5 parts by mass with respect to 100 parts by mass of the carbon fibers to which each compound was adhered. The surface free energy after application of each sizing agent compound used for the carbon fibers and the sizing agent are as follows.

·Reinforcing fiber bundle 2-1

Bisphenol A diglycidyl ether ("jER" (registered trademark) 828, manufactured by Mitsubishi Chemical Corporation)
Surface free energy: 9 mJ/$m^2$
·Reinforcing fiber bundle 2-2
Polyethylene glycol diglycidyl ether ("Denacol" (registered trademark) EX-841, manufactured by Nagase ChemteX Corporation)
Surface free energy: 20 mJ/$m^2$
·Reinforcing fiber bundle 2-3
Sorbitol polyglycidyl ether ("Denacol" (registered trademark) EX-614B, manufactured by Nagase ChemteX Corporation)
Surface free energy: 32 mJ/$m^2$

<Thermosetting Resin Composition>

·Thermosetting resin composition 1

Into a kneading device were put 50 parts by mass, 50 parts by mass, and 7 parts by mass of epoxy resin main agents (araldite (registered trademark) MY721 (manufactured by Huntsman Advanced Materials)), (jER (registered trademark) 825 (manufactured by Mitsubishi Chemical Corporation)), and (Sumika Excel (registered trademark)

PES5003P (manufactured by Sumitomo Chemical Co., Ltd.)), respectively, followed by kneading under heating at 150°C until the components were mutually dissolved. Next, while continuing kneading, the temperature was lowered to 80°C, and 45.1 parts by mass of a curing agent (Seikacure S, (manufactured by Wakayama Seika Kogyo Co., Ltd.)) was added, followed by kneading at 80°C for 30 minutes, to obtain a thermosetting resin composition 1.

·Thermosetting resin composition 2

Into a kneading device were put 50 parts by mass, 50 parts by mass, and 7 parts by mass of epoxy resin main agents (jER (registered trademark) 825 (manufactured by Mitsubishi Chemical Corporation)), (jER (registered trademark) 154 (manufactured by Mitsubishi Chemical Corporation)), and (Sumika Excel (registered trademark) PES5003P (manufactured by Sumitomo Chemical Co., Ltd.)), respectively, followed by kneading under heating at 150°C until the components were mutually dissolved. Next, while continuing kneading, the temperature was lowered to 80°C, and 6.8 parts by mass of a curing agent (DICY7, (manufactured by Mitsubishi Chemical Corporation)) was added, followed by kneading at 60°C for 30 minutes, to obtain a thermosetting resin composition 2.

<Method for Measuring Glass Transition Temperature of Cured Thermosetting Resin>

The thermosetting resin composition prepared by the above method was injected into a mold, heated from 30°C to a temperature shown in Table 1 at a rate of 1.5°C/min in a hot air dryer, and cured by heating for a curing time shown in Table 1, and then, the temperature was lowered to 30°C at a rate of 2.5°C/min to prepare a plate-shaped resin cured product having a thickness of 2 mm. A test piece with a width of 12.7 mm and a length of 45 mm was cut out from the prepared plate-shaped resin cured product, and the test piece was dried in a vacuum oven under 60°C for 24 hours. A storage modulus curve was obtained by a dynamic viscoelasticity test according to JIS K7244-7 (2007), and in this storage modulus curve, a temperature value at an intersection of a tangent line in a glassy state and a tangent line in a transition state was defined as the glass transition temperature. Here, the measurement was performed at a temperature increase rate of 5°C/min and a frequency of 1 Hz.

<Thermoplastic Resin Composition>

·Thermoplastic resin composition 1

Low melting point polyamide (Amilan (registered trademark) CM4000 (manufactured by Toray Industries, Inc.), terpolymerized polyamide resin, melting point 155°C)

·Thermoplastic resin composition 2

Polyamide 6 (Amilan (registered trademark) CM1007 (manufactured by Toray Industries, Inc.), melting point 225°C))

·Thermoplastic resin composition 3

Polyphenylene sulfide (Torelina (registered trademark) A670T05 (manufactured by Toray Industries, Inc.), melting point 278°C)

·Thermoplastic resin composition 4

Polyetherketoneketone (Kepstan (registered trademark) 7002 (manufactured by Arkema Corporation), melting point 332°C)

<Method for Evaluating Thermoplastic Resin>

The melting point of the thermoplastic resin was measured by using a differential scanning calorimeter (DSC) based on JIS K7121 (2012). In the case where a plurality of melting points was observed due to a mixture or the like, the highest melting point was adopted as the melting point of the thermoplastic resin.

<Cross-sectional Observation of Prepreg or Fiber-reinforced Plastic>

An image was taken at 1000-fold magnification by using an optical microscope in a cross section cut in a

thickness direction at an angle orthogonal to a fiber direction of an outermost layer of the prepreg or the fiber-reinforced plastic. For the prepreg, an image was obtained in the same manner as described above in a cross section obtained by cutting the prepreg that had been cured in a non-loaded state.

(1) Acquisition of cross-sectional curve

As illustrated in FIG. 3, a cross-sectional curve was acquired by the following method in arbitrary observation range of 300 μm square in the obtained image. Using an end portion 100 of the rectangular observation image 9 on the thermoplastic resin layer 3 side as a reference line, the vertical baselines 120 are drawn at an interval of 5 μm from the thermoplastic resin layer 3 toward the thermosetting resin layer 2. A line obtained by plotting points where the vertical baselines drawn from the reference line intersect the thermosetting resin layer 2 for the first time and then connecting the plotted points is defined as the cross-sectional curve 130.

(2) Thermoplastic resin layer analysis 1

In arbitrary observation range of 300 μm square in the obtained image, the dispersed phase of the second thermosetting resin in contact with the reinforcing fibers contained in the thermoplastic resin layer was extracted and a size thereof was measured.

The size was the value of the major axis of the dispersed phase of the second thermosetting resin. Note that the major axis of the dispersed phase of the second thermosetting resin is a line segment passing through the two most distant points on the outer periphery of the dispersed phase of the second thermosetting resin, among straight lines passing through the inside of the dispersed phase of the second thermosetting resin confirmed in the cross-sectional observation image, and when the number of the dispersed phases of the second thermosetting resin was 20 or less, the value of the major axis was an average value of lengths of all the dispersed phases, and when the number was 20 or more, the value of the major axis was an average value of lengths measured for randomly selected 20 dispersed phases.

(3) Thermoplastic resin layer analysis 2

In arbitrary observation range of 300 μm square in the obtained image, an area S0 of the thermoplastic resin layer in the reinforcing fiber group and an area S1 of the dispersed phase of the second thermosetting resin contained in the thermoplastic resin layer were calculated. Here, using an end portion on the thermoplastic resin layer side as a reference line, vertical baselines are drawn at an interval of 10 μm from the thermoplastic resin layer toward the thermosetting resin layer divide the observation range into segments. In these segments, the reinforcing fibers closest to the reference line are plotted, and a line obtained by connecting the plotted points is used as a boundary line of the reinforcing fiber group to define the area of the thermoplastic resin layer in the reinforcing fiber group. The obtained S 1 was divided by S0 to obtain a volume ratio A (volume%) of the dispersed phase of the second thermosetting resin contained in the thermoplastic resin layer with respect to the thermoplastic resin layer in the reinforcing fiber group.

(4) Thermoplastic resin layer analysis 3

In arbitrary observation range of 300 μm square in the obtained image, an area S2 of the reinforcing fibers contained in the thermoplastic resin layer and an area S3 of the dispersed phase of the second thermosetting resin contained in the thermoplastic resin layer were calculated. The obtained S3 was divided by S2 to obtain a volume ratio B (volume%) of the dispersed phase of the second thermosetting resin contained in the thermoplastic resin layer with respect to the reinforcing fibers contained in the thermoplastic resin layer.

(5) Thermoplastic resin layer analysis 4

In arbitrary observation range of 300 μm square in the obtained image, a region of 50 μm was obtained from the cross-sectional curve toward the surface side of the thermoplastic resin layer, and an area S4 of the region was calculated. An area S5 of the reinforcing fibers and the dispersed phase of the second thermosetting resin included in the 50 μm region was calculated.

The obtained S5 was divided by S4 to obtain the sum of the volume ratios (volume%) of the reinforcing fibers and the second thermosetting resin that were contained in the thermoplastic resin layer near the cross-sectional curve, with respect to the thermoplastic resin layer near the cross-sectional curve.

<Weldability Evaluation of Fiber-reinforced Plastic>

The fiber-reinforced plastic was cut into a shape with a width of 100 mm and a length of 100 mm with a direction of an angle of 0° with respect to the fiber direction of the contained reinforcing fibers as a length direction of the test piece, and dried in a vacuum oven for 24 hours. Then, the cut fiber-reinforced plastic was placed on a heat-resistant glass plate, and was pressed at 3 MPa at a temperature 20°C higher than a melting point of the thermoplastic resin composition and held for 1 minute to obtain a member in close contact with the heat-resistant glass plate. The fiber-reinforced plastic was observed from the heat-resistant glass plate side, and an area S6 of the thermoplastic resin composition was calculated. By dividing the obtained S6 by an area of the fiber-reinforced plastic, a rate of change P of a projected area of the thermoplastic resin composition was obtained, and evaluated as follows based on the results.

Less than 1.2: A
1.2 or more and less than 1.5: B
1.5 or more: C

<Measurement of Thickness of Adhesive Layer of Integrated Product>

The fiber-reinforced plastic was cut into a shape with a width of 100 mm and a length of 100 mm with a direction of an angle of 0° with respect to the length direction of the contained reinforcing fibers as a length direction of the test piece, and dried in a vacuum oven for 24 hours. The cut fiber-reinforced plastic was placed so as to be in contact with an aluminum alloy member, and was pressed at 3 MPa at a temperature 20°C higher than the melting point of the thermoplastic resin composition and held for 1 minute to obtain an integrated product. An image was taken at 1000-fold magnification by using an optical microscope in a cross section cut out from a joining portion of the obtained integrated product. In arbitrary observation range of 300 μm square in the obtained image, a cross-sectional curve was obtained in the same manner as in (1) Acquisition Method of cross-sectional curve. A vertical line was drawn from a surface of the aluminum alloy member on the fiber-reinforced plastic side toward the fiber-reinforced plastic side, and a distance until the vertical line intersects the cross-sectional curve was obtained. An average value obtained by repeating the above treatment a total of 20 times was evaluated as a thickness of the adhesive layer of the integrated product.

(Example 1)

A reinforcing fiber sheet (basis weight: 193 g/$m^2$) formed by aligning and opening the reinforcing fiber bundle 1 in one direction to form a continuous reinforcing fiber group was run in one direction, and a non-woven resin sheet having a basis weight of 120 g/$m^2$ made of the thermoplastic resin composition 2 as a precursor of the thermoplastic resin layer was placed on the reinforcing fiber sheet. The thermoplastic resin composition 2 was partially melted by being heated with an IR heater, attached to one surface of the reinforcing fiber sheet, and pressed with nip rolls, whose surface temperature was kept below the melting point of the thermoplastic resin composition 2, to thereby being impregnated with the reinforcing fiber sheet, and then cooled to obtain a prepreg intermediate.

The thermosetting resin composition 1 as a precursor of the thermosetting resin layer was coated on release paper with a resin basis weight of 100 g/$m^2$ by using a knife coater, to prepare a thermosetting resin film. Then, the thermosetting resin film was superimposed on the other surface of the intermediate impregnated with the thermoplastic resin composition 2. The thermosetting resin composition 1 was impregnated with the intermediate by being heated and pressed with a heat roll while completely melting the thermoplastic resin composition 2, to thereby obtain a prepreg 1. In this case, properties of the prepreg 1 were as shown in Table 2 since the thermoplastic resin layer was formed after the thermosetting resin was incorporated into an unmelted non-woven fabric portion.

(Example 2)

A prepreg 2 was obtained in the same manner as in Example 1, except that the thermosetting resin composition 2 and the thermoplastic resin composition 1 were used. Properties of the prepreg 2 were as shown in Table 2.

(Example 3)

A reinforcing fiber sheet (basis weight: 193 g/$m^2$) formed by aligning and opening the reinforcing fiber bundle 1 in one direction to form a continuous reinforcing fiber group was run in one direction. The thermosetting resin composition 1 was freeze-pulverized and the obtained particles were dispersed on one side of the reinforcing fiber sheet as a precursor of the dispersed phase of the second thermosetting resin, and the particles of the thermosetting resin composition 1 were impregnated in the vicinity of the surface of the reinforcing fiber sheet by being heated with an IR heater.

Furthermore, a film-shape resin sheet having a basis weight of 120 g/m$^2$ made of the thermoplastic resin composition 2 as a precursor of the thermoplastic resin layer was placed on the same surface as the surface of the reinforcing fiber sheet on which the particles were dispersed. The thermoplastic resin composition 2 was melted by being heated with an IR heater, attached to one whole surface of the reinforcing fiber sheet, and then pressed with nip rolls, whose surface temperature was kept below the melting point of the thermoplastic resin composition 2, to thereby being impregnated with the reinforcing fiber sheet, and then cooled to obtain a prepreg intermediate.

The thermosetting resin composition 1 as a precursor of the thermosetting resin layer was coated on release paper with a resin basis weight of 100 g/m$^2$ by using a knife coater, to prepare a thermosetting resin film. Then, the thermosetting resin film was superimposed on a surface of the intermediate opposite to the surface in which the thermoplastic resin composition 1 was impregnated. The thermosetting resin composition 1 was impregnated with the intermediate while being heated and pressed with a heat roll, to thereby obtain a prepreg 3. Properties of the prepreg 3 were as shown in Table 2.

(Example 4)

A prepreg 4 was obtained in the same manner as in Example 3, except that the thermoplastic resin composition 3 was used. Properties of the prepreg 4 were as shown in Table 2.

(Example 5)

A prepreg 5 was obtained in the same manner as in Example 3, except that the thermosetting resin composition 2 and the thermoplastic resin composition 3 were used. Properties of the prepreg 5 were as shown in Table 2.

(Example 6)

A reinforcing fiber sheet (basis weight: 193 g/m$^2$) formed by aligning and opening the reinforcing fiber bundle 1 in one direction to form a continuous reinforcing fiber group was run in one direction. The thermosetting resin composition 2 was freeze-pulverized and the obtained particles were dispersed on one side of the reinforcing fiber sheet as a precursor of the dispersed phase of the second thermosetting resin, and the particles of the thermosetting resin composition 2 were impregnated in the vicinity of the surface of the reinforcing fiber sheet by being heated with an IR heater.

Furthermore, a film-shape resin sheet having a basis weight of 120 g/m$^2$ made of the thermoplastic resin composition 2 as a precursor of the thermoplastic resin layer was placed on the same surface as the surface of the reinforcing fiber sheet on which the particles were dispersed. The thermoplastic resin composition 2 was melted by being heated with an IR heater, attached to one whole surface of the reinforcing fiber sheet, and then pressed with nip rolls, whose surface temperature was kept below the melting point of the thermoplastic resin composition 2, to thereby being impregnated with the reinforcing fiber sheet, and then cooled to obtain a prepreg intermediate.

The thermosetting resin composition 1 as a precursor of the thermosetting resin layer was coated on release paper with a resin basis weight of 100 g/m$^2$ by using a knife coater, to prepare a thermosetting resin film. Then, the thermosetting resin film was superimposed on a surface of the intermediate opposite to the surface in which the thermoplastic resin composition 1 was impregnated. The thermosetting resin composition 1 was impregnated with the intermediate while being heated and pressed with a heat roll, to thereby obtain a prepreg 6. Properties of the prepreg 6 were as shown in Table 2.

(Comparative Example 1)

A prepreg 7 was obtained in the same manner as in Example 1, except that a film-shape resin sheet having a basis weight of 120 g/m$^2$ made of the thermoplastic resin composition 3 was used as a precursor of the thermoplastic resin layer. Properties of the prepreg 7 were as shown in Table 2.

(Reference Example 1)

The thermosetting resin composition 1 was coated on release paper with a resin basis weight of 50 g/m$^2$ by using a knife coater to produce a thermosetting resin film. The resin film is superimposed on both sides of the reinforcing fiber sheet (basis weight: 193 g/m2) made of the reinforcing fiber bundle 1 aligned in one direction. The thermosetting resin composition was impregnated with the reinforcing fiber bundle by being heated and pressed by using a heat roll, to thereby obtain a prepreg 8.

(Reference Example 2)

A prepreg 9 was obtained in the same manner as in Reference Example 1, except that the thermosetting resin composition 2 was used.

(Example 7)

The prepreg 1 produced in Example 1 and the prepreg 8 produced in Reference Example 1 were cut into predetermined sizes, and two prepregs 1 and six prepregs 8 were prepared.

The fiber direction of the reinforcing fibers was defined as 0° and a direction perpendicular to the fiber direction was defined as 90°, and the prepregs were laminated at $[0°/90°]_{2S}$ (the symbol s indicates a mirror symmetry) to produce a preform. In this case, the prepregs were laminated such that the two outermost layers on each side of the preform were the prepreg 1, and both surface layers of the preform were the thermoplastic resin layer containing the thermoplastic resin. This preform was set in a press molding die, and while maintaining the shape by using a jig or spacer if necessary, the die was applied with a pressure of 0.6 MPa by a press, heated at 180°C for 2 hours, to thereby obtain a fiber-reinforced plastic 1. Properties of the fiber-reinforced plastic 1 are shown in Table 3.

(Example 8)

The prepreg 2 produced in Example 2 and the prepreg 9 produced in Reference Example 2 were cut into predetermined sizes, and two prepregs 2 and six prepregs 9 were prepared.

The fiber direction of the reinforcing fibers was defined as 0° and a direction perpendicular to the fiber direction was defined as 90°, and the prepregs were laminated at $[0°/90°]_{2S}$ (the symbol s indicates a mirror symmetry) to produce a preform. In this case, the prepregs were laminated such that the two outermost layers on each side of the preform were the prepreg 2, and both surface layers of the preform were the thermoplastic resin layer containing the thermoplastic resin. This preform was set in a press molding die, and while maintaining the shape by using a jig or spacer if necessary, the die was applied with a pressure of 0.6 MPa by a press, heated at 135°C for 2 hours, to thereby obtain a fiber-reinforced plastic 2. Properties of the fiber-reinforced plastic 2 are shown in Table 3.

(Example 9)

The prepreg 3 produced in Example 3 and the prepreg 8 produced in Reference Example 1 were cut into predetermined sizes, and two prepregs 3 and six prepregs 8 were prepared.

The fiber direction of the reinforcing fibers was defined as 0° and a direction perpendicular to the fiber direction was defined as 90°, and the prepregs were laminated at $[0°/90°]_{2S}$ (the symbol s indicates a mirror symmetry) to produce a preform. In this case, the prepregs were laminated such that the two outermost layers on each side of the preform were the prepreg 3, and both surface layers of the preform were the thermoplastic resin layer containing the thermoplastic resin. This preform was set in a press molding die, and while maintaining the shape by using a jig or spacer if necessary, the die was applied with a pressure of 0.6 MPa by a press, heated at 180°C for 2 hours, to thereby obtain a fiber-reinforced plastic 3. Properties of the fiber-reinforced plastic 3 are shown in Table 3.

(Example 10)

The prepreg 4 produced in Example 4 and the prepreg 8 produced in Reference Example 1 were cut into predetermined sizes, and two prepregs 4 and six prepregs 8 were prepared.

The fiber direction of the reinforcing fibers was defined as 0° and a direction perpendicular to the fiber direction was defined as 90°, and the prepregs were laminated at $[0°/90°]_{2S}$ (the symbol s indicates a mirror symmetry) to produce a preform. In this case, the prepregs were laminated such that the two outermost layers on each side of the preform were the prepreg 4, and both surface layers of the preform were the thermoplastic resin layer containing the thermoplastic resin. This preform was set in a press molding die, and while maintaining the shape by using a jig or spacer if necessary, the die was applied with a pressure of 0.6 MPa by a press, heated at 180°C for 2 hours, to thereby obtain a fiber-reinforced plastic 4. Properties of the fiber-reinforced plastic 4 are shown in Table 3.

(Example 11)

The prepreg 5 produced in Example 5 and the prepreg 9 produced in Reference Example 2 were cut into predetermined sizes, and two prepregs 5 and six prepregs 9 were prepared.

The fiber direction of the reinforcing fibers was defined as 0° and a direction perpendicular to the fiber direction

was defined as 90°, and the prepregs were laminated at $[0°/90°]_{2S}$ (the symbol s indicates a mirror symmetry) to produce a preform. In this case, the prepregs were laminated such that the two outermost layers on each side of the preform were the prepreg 5, and both surface layers of the preform were the thermoplastic resin layer containing the thermoplastic resin. This preform was set in a press molding die, and while maintaining the shape by using a jig or spacer if necessary, the die was applied with a pressure of 0.6 MPa by a press, heated at 135°C for 2 hours, to thereby obtain a fiber-reinforced plastic 5. Properties of the fiber-reinforced plastic 5 are shown in Table 3.

(Example 12)

The prepreg 6 produced in Example 6 and the prepreg 8 produced in Reference Example 1 were cut into predetermined sizes, and two prepregs 6 and six prepregs 8 were prepared.

The fiber direction of the reinforcing fibers was defined as 0° and a direction perpendicular to the fiber direction was defined as 90°, and the prepregs were laminated at $[0°/90°]_{2S}$ (the symbol s indicates a mirror symmetry) to produce a preform. In this case, the prepregs were laminated such that the two outermost layers on each side of the preform were the prepreg 6, and both surface layers of the preform were the thermoplastic resin layer containing the thermoplastic resin. This preform was set in a press molding die, and while maintaining the shape by using a jig or spacer if necessary, the die was applied with a pressure of 0.6 MPa by a press, heated at 180°C for 2 hours, to thereby obtain a fiber-reinforced plastic 6. Properties of the fiber-reinforced plastic 6 are shown in Table 3.

(Comparative Example 2)

The prepreg 7 produced in Comparative Example 1 and the prepreg 9 produced in Reference Example 2 were cut into predetermined sizes, and two prepregs 7 and six prepregs 9 were prepared.

The fiber direction of the reinforcing fibers was defined as 0° and a direction perpendicular to the fiber direction was defined as 90°, and the prepregs were laminated at $[0°/90°]_{2S}$ (the symbol s indicates a mirror symmetry) to produce a preform. In this case, the prepregs were laminated such that the two outermost layers on each side of the preform were the prepreg 7, and both surface layers of the preform were the thermoplastic resin layer containing the thermoplastic resin. This preform was set in a press molding die, and while maintaining the shape by using a jig or spacer if necessary, the die was applied with a pressure of 0.6 MPa by a press, heated at 135°C for 2 hours, to thereby obtain a fiber-reinforced plastic 7. Properties of the fiber-reinforced plastic 7 are shown in Table 3.

(Example 13)

A reinforcing fiber sheet (basis weight: 193 $g/m^2$) formed by aligning and opening the reinforcing fiber bundle 1 in one direction to form a continuous reinforcing fiber group was run in one direction, and a film-shape resin sheet having a basis weight of 120 $g/m^2$ made of the thermoplastic resin composition 2 as a precursor of the thermoplastic resin layer was placed on a surface of the reinforcing fiber sheet. The thermoplastic resin composition 2 was melted by being heated with an IR heater, attached to one whole surface of the reinforcing fiber sheet, and pressed with nip rolls, whose surface temperature was kept below the melting point of the thermoplastic resin composition 2, to thereby being impregnated with the reinforcing fiber sheet, and then cooled to obtain a prepreg intermediate.

The thermosetting resin composition 1 as a precursor of the thermosetting resin layer was coated on release paper with a resin basis weight of 100 $g/m^2$ by using a knife coater, to prepare a thermosetting resin film. Then, the thermosetting resin film was superimposed on a surface of the intermediate opposite to the surface in which the thermoplastic resin composition 1 was impregnated. The resultant was heated and pressed by a heat roll, and immediately thereafter, allowed to pass through an ultrasonic wave generator, to thereby disperse the precursor of the thermoplastic resin layer in the reinforcing fiber sheet. In this case, the ultrasonic wave generator had a frequency of 20 kHz, an amplitude of 100%, and a pressure of 1.0 MPa. A contact distance between a horn of the ultrasonic wave generator and the prepreg intermediate was approximately 25 mm, and a time during which ultrasonic vibration was applied was approximately 1.0 second. In this manner, the thermosetting resin composition 1 was impregnated with the intermediate while applying a shear force to the intermediate, so that the dispersed phase of the thermosetting resin was formed, to thereby obtain a prepreg 13. Properties of the prepreg 13 are shown in Table 4.

(Example 14)

A prepreg 14 was obtained in the same manner as in Example 13, except that in Example 13, the reinforcing fiber bundle 2-1 was used. Properties of the prepreg 14 are shown in Table 4.

(Example 15)

A prepreg 15 was obtained in the same manner as in Example 13, except that in Example 13, the reinforcing fiber bundle 2-2 was used. Properties of the prepreg 15 are shown in Table 4.

(Example 16)

A prepreg 16 was obtained in the same manner as in Example 13, except that in Example 13, the reinforcing fiber bundle 2-3 was used. Properties of the prepreg 16 are shown in Table 4.

(Example 17)

The prepreg 13 produced in Example 13 and the prepreg 8 produced in Reference Example 1 were cut into predetermined sizes, and two prepregs 13 and six prepregs 8 were prepared.
The fiber direction of the reinforcing fibers was defined as 0° and a direction perpendicular to the fiber direction was defined as 90°, and the prepregs were laminated at $[0°/90°]_{2S}$ (the symbol s indicates a mirror symmetry) to produce a preform. In this case, the prepregs were laminated such that the two outermost layers on each side of the preform were the prepreg 13, and both surface layers of the preform were the thermoplastic resin layer containing the thermoplastic resin. This preform was set in a press molding die, and while maintaining the shape by using a jig or spacer if necessary, the die was applied with a pressure of 0.6 MPa by a press, heated at 180°C for 2 hours, to thereby obtain a fiber-reinforced plastic 13. Properties of the fiber-reinforced plastic 13 are shown in Table 5.

(Example 18)

A fiber-reinforced plastic 14 was obtained in the same manner as in Example 17, except that in Example 17, the prepreg 14 produced in Example 14 was used. Properties of the fiber-reinforced plastic 14 are shown in Table 5.

(Example 19)

A fiber-reinforced plastic 15 was obtained in the same manner as in Example 17, except that in Example 17, the prepreg 15 produced in Example 15 was used. Properties of the fiber-reinforced plastic 15 are shown in Table 5.

(Example 20)

A fiber-reinforced plastic 16 was obtained in the same manner as in Example 17, except that in Example 17, the prepreg 16 produced in Example 16 was used. Properties of the fiber-reinforced plastic 16 are shown in Table 5.

(Example 21)

A reinforcing fiber sheet (basis weight: 193 g/$m^2$) formed by aligning and opening the reinforcing fiber bundle 1 in one direction to form a continuous reinforcing fiber group was run in one direction, and a film-shape resin sheet having a basis weight of 120 g/$m^2$ made of the thermoplastic resin composition 3 as a precursor of the thermoplastic resin layer was placed on a surface of the reinforcing fiber sheet. The thermoplastic resin composition 3 was melted by being heated with an IR heater, attached to one whole surface of the reinforcing fiber sheet, and pressed with nip rolls, whose surface temperature was kept below the melting point of the thermoplastic resin composition 3, to thereby being impregnated with the reinforcing fiber sheet, and then cooled to obtain a prepreg intermediate.
The thermosetting resin composition 1 as a precursor of the thermosetting resin layer was coated on release paper with a resin basis weight of 100 g/$m^2$ by using a knife coater, to prepare a thermosetting resin film. Then, the thermosetting resin film was superimposed on a surface of the intermediate opposite to the surface in which the thermoplastic resin composition 3 was impregnated. The resultant was heated and pressed by a heat roll, and immediately thereafter, allowed to pass through an ultrasonic wave generator, to thereby impregnate the thermosetting resin composition 1 with the intermediate while applying a shear force to the intermediate, so that the dispersed phase of the thermosetting resin was formed. In this manner, a prepreg 21 was obtained. In this case, the ultrasonic wave generator had a frequency of 20 kHz, an amplitude of 100%, and a pressure of 1.0 MPa. A contact distance between a horn of the ultrasonic wave generator and the prepreg intermediate was approximately 25 mm, and a time during which ultrasonic vibration was applied was approximately 0.7 seconds. Properties of the prepreg 21 are shown in Table 4.

(Example 22)

A reinforcing fiber sheet (basis weight: 193 g/m$^2$) formed by aligning and opening the reinforcing fiber bundle 1 in one direction to form a continuous reinforcing fiber group was run in one direction, and a film-shape resin sheet having a basis weight of 120 g/m$^2$ made of the thermoplastic resin composition 4 as a precursor of the thermoplastic resin layer was placed on a surface of the reinforcing fiber sheet. The thermoplastic resin composition 4 was melted by being heated with an IR heater, attached to one whole surface of the reinforcing fiber sheet, and pressed with nip rolls, whose surface temperature was kept below the melting point of the thermoplastic resin composition 4, to thereby being impregnated with the reinforcing fiber sheet, and then cooled to obtain a prepreg intermediate.

The thermosetting resin composition 1 as a precursor of the thermosetting resin layer was coated on release paper with a resin basis weight of 100 g/m$^2$ by using a knife coater, to prepare a thermosetting resin film. Then, the thermosetting resin film was superimposed on a surface of the intermediate opposite to the surface in which the thermoplastic resin composition 4 was impregnated. The resultant was heated and pressed by a heat roll, and immediately thereafter, allowed to pass through an ultrasonic wave generator, to thereby impregnate the thermosetting resin composition 1 with the intermediate while applying a shear force to the intermediate, so that the dispersed phase of the thermosetting resin was formed. In this manner, a prepreg 22 was obtained. In this case, the ultrasonic wave generator had a frequency of 20 kHz, an amplitude of 100%, and a pressure of 1.0 MPa. A contact distance between a horn of the ultrasonic wave generator and the prepreg intermediate was approximately 25 mm, and a time during which ultrasonic vibration was applied was approximately 0.8 seconds. Properties of the prepreg 22 are shown in Table 4.

(Example 23)

The prepreg 21 produced in Example 21 and the prepreg 8 produced in Reference Example 1 were cut into predetermined sizes, and two prepregs 21 and six prepregs 8 were prepared.

The fiber direction of the reinforcing fibers was defined as 0° and a direction perpendicular to the fiber direction was defined as 90°, and the prepregs were laminated at $[0°/90°]_{2S}$ (the symbol s indicates a mirror symmetry) to produce a preform. In this case, the prepregs were laminated such that the two outermost layers on each side of the preform were the prepreg 21, and both surface layers of the preform were the thermoplastic resin layer containing the thermoplastic resin. This preform was set in a press molding die, and while maintaining the shape by using a jig or spacer if necessary, the die was applied with a pressure of 0.6 MPa by a press, heated at 180°C for 2 hours, to thereby obtain a fiber-reinforced plastic 23. Properties of the fiber-reinforced plastic 23 are shown in Table 5.

(Example 24)

The prepreg 22 produced in Example 22 and the prepreg 8 produced in Reference Example 1 were cut into predetermined sizes, and two prepregs 22 and six prepregs 8 were prepared.

The fiber direction of the reinforcing fibers was defined as 0° and a direction perpendicular to the fiber direction was defined as 90°, and the prepregs were laminated at $[0°/90°]_{2S}$ (the symbol s indicates a mirror symmetry) to produce a preform. In this case, the prepregs were laminated such that the two outermost layers on each side of the preform were the prepreg 22, and both surface layers of the preform were the thermoplastic resin layer containing the thermoplastic resin. This preform was set in a press molding die, and while maintaining the shape by using a jig or spacer if necessary, the die was applied with a pressure of 0.6 MPa by a press, heated at 180°C for 2 hours, to thereby obtain a fiber-reinforced plastic 24. Properties of the fiber-reinforced plastic 24 are shown in Table 5.

<Investigation>

Comparison between Examples 1 to 6 and Comparative Example 1 shows that the dispersed phase of the second thermosetting resin contained in the thermoplastic resin layer and the reinforcing fibers contained in the thermoplastic resin layer are formed. Comparison between Examples 1 and 2 and Examples 3 to 6 shows that by adding the dispersed phase of the second thermosetting resin in advance to the reinforcing fiber sheet forming the reinforcing fiber group, the size of the dispersed phase of the second thermosetting resin that is contained in the thermoplastic resin layer and binds the reinforcing fibers of the thermoplastic resin layer can be controlled.

Comparison between Examples 7 to 12 and Comparative Example 2 shows that by providing the dispersed phase of the second thermosetting resin contained in the thermoplastic resin layer and the reinforcing fibers contained in the thermoplastic resin layer, when forming an integrated product by welding, the outflow of the thermoplastic resin layer can be prevented, and a molded product with high joining quality can be manufactured. Comparison between Example 7 and Example 12 and Comparison between Example 10 and Example 11 show that since the second thermosetting resin contained in the thermoplastic resin layer has a high glass transition temperature, the amount of deformation due to heat during welding to form the integrated product can be reduced, the outflow of the thermoplastic resin layer can be prevented, and a molded product with high joining quality can be manufactured.

Comparison between Example 1 and Example 13 shows that by vibrating the joining surface between the thermoplastic resin layer and the thermosetting resin layer, the dispersed phase of the second thermosetting resin contained in the thermoplastic resin layer is densely formed. Comparison between Examples 13 to 16 shows that by using reinforcing fibers with high surface free energy, the fluidity of the resin is promoted, and the volume ratio of the dispersed phase of the second thermosetting resin to the thermoplastic resin contained in the thermoplastic resin layer is increased.

Comparison between Examples 21 and 22 and Comparative Example 1 confirms that by vibrating the joining surface between the thermoplastic resin layer and the thermosetting resin layer, the dispersed phase of the second thermosetting resin contained in the thermoplastic resin layer is formed.

In any of Examples 17 to 20 and Examples 23 and 24, it is shown that by providing the dispersed phase of the second thermosetting resin contained in the thermoplastic resin layer and the reinforcing fibers contained in the thermoplastic resin layer, when forming an integrated product by welding, the outflow of the thermoplastic resin layer can be prevented, and a molded product with high joining quality can be manufactured.

[Table 1]

| | | | Thermosetting resin composition 1 | Thermosetting resin composition 2 |
|---|---|---|---|---|
| Thermosetting resin composition | Thermosetting resin (epoxy resin) | Tetraglycidyldiaminodiphenylmethane ("araldite®"MY721) | 50 | |
| | | Bisphenol A epoxy ("jER®"825) | 50 | 50 |
| | | Phenolic novolac epoxy ("jER®"154) | | 50 |
| | Amine compound | 4,4'-Diaminodiphenyl Sulfone (SEIKACURE-S) | 45.1 | |
| | | Dicyandiamide (DICY7) | | 6.8 |
| | Viscosity modifier | Polyether sulfone ("Sumika Excel®"PES5003P) | 7 | 7 |
| Curing conditions | | Curing temperature (°C) | 180 | 135 |
| | | Curing time (hour) | 2 | 2 |
| Properties of cured thermosetting resin | | Glass transition temperature (°C) | 195 | 137 |

[Table 2]

| | | Example 1 | Example 2 | Example 3 | Example 4 | Example 5 |
|---|---|---|---|---|---|---|
| Reinforcing fiber bundle | Type | Reinforcing fiber bundle 1 | Reinforcing fiber bundle 1 | Reinforcing fiber bundle 1 | Reinforcing fiber bundle 1 | Reinforcing fiber bundle 1 |
| | Surface free energy (mJ/m$^2$) | 15 | 15 | 15 | 15 | 15 |
| Thermosetting resin layer | | Thermosetting resin composition 1 | Thermosetting resin composition 2 | Thermosetting resin composition 1 | Thermosetting resin composition 1 | Thermosetting resin composition 2 |
| Thermoplastic resin layer | | Thermoplastic resin composition 2 | Thermoplastic resin composition 1 | Thermoplastic resin composition 2 | Thermoplastic resin composition 3 | Thermoplastic resin composition 3 |
| | | Polyamide 6 | Low melting point polyamide | Polyamide 6 | PPS | PPS |
| Presence or absence of vibration applied by passing through ultrasonic wave generator | | No | No | No | No | No |
| Thermoplastic resin layer constitution | Second thermosetting resin region | Thermosetting resin composition 1 | Thermosetting resin composition 2 | Thermosetting resin composition 1 | Thermosetting resin composition 1 | Thermosetting resin composition 2 |
| | Second thermosetting resin region size (µm) | 2 | 3 | 20 | 20 | 30 |
| | Presence or absence of binding between plurality of reinforcing fibers and second thermosetting resin | Yes | Yes | Yes | Yes | Yes |
| Volume ratio A (volume%) of dispersed phase of second thermosetting resin to thermoplastic resin contained in thermoplastic resin layer | | 11 | 19 | 15 | 13 | 10 |
| Volume ratio B (volume%) of dispersed phase of second thermosetting resin to carbon fibers contained in thermoplastic resin layer | | 4 | 7 | 32 | 26 | 28 |
| Sum of volume ratios (volume%) of reinforcing fibers and second thermosetting resin contained in thermoplastic resin layer | | 26 | 32 | 42 | 38 | 34 |

[Table 2 (Continued)]

| | | Example 6 | Comparative Example 1 | Reference Example 1 | Reference Example 2 |
|---|---|---|---|---|---|
| Reinforcing fiber bundle | Type | Reinforcing fiber bundle 1 | Reinforcing fiber bundle 1 | Reinforcing fiber bundle 1 | Reinforcing fiber bundle 1 |
| | Surface free energy (mJ/m$^2$) | 15 | 15 | 15 | 15 |
| Thermosetting resin layer | | Thermosetting resin composition 1 | Thermosetting resin composition 1 | Thermosetting resin composition 1 | Thermosetting resin composition 2 |
| Thermoplastic resin layer | | Thermoplastic resin composition 2 | Thermoplastic resin composition 3 | - | - |
| | | Polyamide 6 | PPS | | |
| Presence or absence of vibration applied by passing through ultrasonic wave generator | | No | No | No | No |
| Thermoplastic resin layer constitution | Second thermosetting resin region | Thermosetting resin composition 2 | - | - | - |
| | Second thermosetting resin region size (µm) | 30 | | | |
| | Presence or absence of binding between plurality of reinforcing fibers and second thermosetting resin | Yes | No | No | No |
| Volume ratio A (volume%) of dispersed phase of second thermosetting resin to thermoplastic resin contained in thermoplastic resin layer | | 12 | 0 | - | - |
| Volume ratio B (volume%) of dispersed phase of second thermosetting resin to carbon fibers contained in thermoplastic resin layer | | 30 | 0 | - | - |
| Sum of volume ratios (volume%) of reinforcing fibers and second thermosetting resin contained in thermoplastic resin layer | | 33 | 18 | - | - |

[Table 3]

| | | Example 7 | Example 8 | Example 9 | Example 10 |
|---|---|---|---|---|---|
| Reinforcing fiber bundle | Type | Reinforcing fiber bundle 1 | Reinforcing fiber bundle 1 | Reinforcing fiber bundle 1 | Reinforcing fiber bundle 1 |
| | Surface free energy (mJ/m$^2$) | 15 | 15 | 15 | 15 |
| Thermosetting resin layer | | Thermosetting resin composition 1 | Thermosetting resin composition 2 | Thermosetting resin composition 1 | Thermosetting resin composition 1 |
| Thermoplastic resin layer | | Thermoplastic resin composition 2 | Thermoplastic resin composition 1 | Thermoplastic resin composition 2 | Thermoplastic resin composition 3 |
| | | Polyamide 6 | Low melting point polyamide | Polyamide 6 | PPS |
| Presence or absence of vibration applied by passing through ultrasonic wave generator | | No | No | No | No |
| Preform molding conditions | Curing temperature (°C) | 180 | 135 | 180 | 180 |
| | Curing time (hour) | 2 | 2 | 2 | 2 |
| Thermoplastic resin layer constitution | Second thermosetting resin region | Thermosetting resin composition 1 | Thermosetting resin composition 2 | Thermosetting resin composition 1 | Thermosetting resin composition 1 |
| | Second thermosetting resin region size (μm) | 3 | 5 | 20 | 20 |
| | Presence or absence of binding between plurality of reinforcing fibers and second thermosetting resin | Yes | Yes | Yes | Yes |
| Volume ratio (volume%) of dispersed phase of second thermosetting resin to thermoplastic resin contained in thermoplastic resin layer | | 12 | 21 | 17 | 13 |
| Volume ratio (volume%) of dispersed phase of second thermosetting resin to carbon fibers contained in thermoplastic resin layer | | 6 | 8 | 34 | 27 |
| Sum of volume ratios (volume%) of reinforcing fibers and second thermosetting resin contained in thermoplastic resin layer | | 28 | 35 | 44 | 39 |
| Weldability evaluation of fiber-reinforced plastic | | A | A | A | A |
| Thickness (μm) of adhesive layer of integrated product | | 24 | 28 | 48 | 50 |

[Table 3 (Continued)]

| | | Example 11 | Example 12 | Comparative Example 2 |
|---|---|---|---|---|
| Reinforcing fiber bundle | Type | Reinforcing fiber bundle 1 | Reinforcing fiber bundle 1 | Reinforcing fiber bundle 1 |
| | Surface free energy (mJ/m$^2$) | 15 | 15 | 15 |
| Thermosetting resin layer | | Thermosetting resin composition 2 | Thermosetting resin composition 1 | Thermosetting resin composition 2 |
| Thermoplastic resin layer | | Thermoplastic resin composition 3 | Thermoplastic resin composition 2 | Thermoplastic resin composition 3 |
| | | PPS | Polyamide 6 | PPS |
| Presence or absence of vibration applied by passing through ultrasonic wave generator | | No | No | No |
| Preform molding conditions | Curing temperature (°C) | 135 | 180 | 135 |
| | Curing time (hour) | 2 | 2 | 2 |
| Thermoplastic resin layer constitution | Second thermosetting resin region | Thermosetting resin composition 2 | Thermosetting resin composition 2 | - |
| | Second thermosetting resin region size (μm) | 30 | 30 | - |
| | Presence or absence of binding between plurality of reinforcing fibers and second thermosetting resin | Yes | Yes | No |
| Volume ratio (volume%) of dispersed phase of second thermosetting resin to thermoplastic resin contained in thermoplastic resin layer | | 10 | 13 | 0 |
| Volume ratio (volume%) of dispersed phase of second thermosetting resin to carbon fibers contained in thermoplastic resin layer | | 28 | 30 | 0 |
| Sum of volume ratios (volume%) of reinforcing fibers and second thermosetting resin contained in thermoplastic resin layer | | 34 | 36 | 18 |
| Weldability evaluation of fiber-reinforced plastic | | B | B | C |
| Thickness (μm) of adhesive layer of integrated product | | 30 | 11 | 5 |

[Table 4]

| | | Example 13 | Example 14 | Example 15 | Example 16 | Example 21 | Example 22 |
|---|---|---|---|---|---|---|---|
| Reinforcing fiber bundle | Type | Reinforcing fiber bundle 1 | Reinforcing fiber bundle 2-1 | Reinforcing fiber bundle 2-2 | Reinforcing fiber bundle 2-3 | Reinforcing fiber bundle 1 | Reinforcing fiber bundle 1 |
| | Surface free energy (mJ/$m^2$) | 15 | 9 | 20 | 32 | 15 | 15 |
| Thermosetting resin layer | | Thermosetting resin composition 1 | Thermosetting resin composition 1 | Thermosetting resin composition 1 | Thermosetting resin composition 1 | Thermosetting resin composition 1 | Thermosetting resin composition 1 |
| Thermoplastic resin layer | | Thermoplastic resin composition 2 | Thermoplastic resin composition 2 | Thermoplastic resin composition 2 | Thermoplastic resin composition 2 | Thermoplastic resin composition 3 | Thermoplastic resin composition 4 |
| | | Polyamide 6 | Polyamide 6 | Polyamide 6 | Polyamide 6 | PPS | PEKK |
| Presence or absence of vibration applied by passing through ultrasonic wave generator | | Yes | Yes | Yes | Yes | Yes | Yes |
| Thermoplastic resin layer constitution | Second thermosetting resin region | Thermosetting resin composition 1 | Thermosetting resin composition 1 | Thermosetting resin composition 1 | Thermosetting resin composition 1 | Thermosetting resin composition 1 | Thermosetting resin composition 1 |
| | Second thermosetting resin region size ($\mu$m) | 1 | 1 | 1 | 1 | 1 | 1 |
| | Presence or absence of binding between plurality of reinforcing fibers and second thermosetting resin | Yes | Yes | Yes | Yes | Yes | Yes |
| Volume ratio A (volume%) of dispersed phase of second thermosetting resin to thermoplastic resin contained in thermoplastic resin layer | | 12 | 8 | 20 | 25 | 12 | 10 |
| Volume ratio B (volume%) of dispersed phase of second thermosetting resin to carbon fibers contained in thermoplastic resin layer | | 5 | 3 | 10 | 13 | 5 | 6 |
| Sum of volume ratios (volume%) of reinforcing fibers and second thermosetting resin contained in thermoplastic resin layer | | 28 | 17 | 38 | 45 | 27 | 29 |

[Table 5]

| | | Example 7 | Example 17 | Example 18 | Example 19 |
|---|---|---|---|---|---|
| Reinforcing fiber bundle | Type | Reinforcing fiber bundle 1 | Reinforcing fiber bundle 1 | Reinforcing fiber bundle 2-1 | Reinforcing fiber bundle 2-2 |
| | Surface free energy (mJ/m$^2$) | 15 | 15 | 9 | 20 |
| Thermosetting resin layer | | Thermosetting resin composition 1 | Thermosetting resin composition 1 | Thermosetting resin composition 1 | Thermosetting resin composition 1 |
| Thermoplastic resin layer | | Thermoplastic resin composition 2 | Thermoplastic resin composition 2 | Thermoplastic resin composition 2 | Thermoplastic resin composition 2 |
| | | Polyamide 6 | Polyamide 6 | Polyamide 6 | Polyamide 6 |
| Presence or absence of vibration applied by passing through ultrasonic wave generator | | No | Yes | Yes | Yes |
| Preform molding conditions | Curing temperature (°C) | 180 | 180 | 180 | 180 |
| | Curing time (hour) | 2 | 2 | 2 | 2 |
| Thermoplastic resin layer constitution | Second thermosetting resin region | Thermosetting resin composition 1 | Thermosetting resin composition 2 | Thermosetting resin composition 1 | Thermosetting resin composition 1 |
| | Second thermosetting resin region size (μm) | 3 | 2 | 2 | 2 |
| | Presence or absence of binding between plurality of reinforcing fibers and second thermosetting resin | Yes | Yes | Yes | Yes |
| Volume ratio A (volume%) of dispersed phase of second thermosetting resin to thermoplastic resin contained in thermoplastic resin layer | | 12 | 13 | 9 | 22 |
| Volume ratio B (volume%) of dispersed phase of second thermosetting resin to carbon fibers contained in thermoplastic resin layer | | 6 | 6 | 5 | 12 |
| Sum of volume ratios (volume%) of reinforcing fibers and second thermosetting resin contained in thermoplastic resin layer | | 28 | 30 | 20 | 39 |
| Weldability evaluation of fiber-reinforced plastic | | A | A | B | A |
| Thickness (μm) of adhesive layer of integrated product | | 24 | 25 | 25 | 27 |

[Table 5 (Continued)]

| | | Example 20 | Example 23 | Example 24 |
|---|---|---|---|---|
| Reinforcing fiber bundle | Type | Reinforcing fiber bundle 2-3 | Reinforcing fiber bundle 1 | Reinforcing fiber bundle 1 |
| | Surface free energy (mJ/m$^2$) | 32 | 15 | 15 |
| Thermosetting resin layer | | Thermosetting resin composition 1 | Thermosetting resin composition 1 | Thermosetting resin composition 1 |
| Thermoplastic resin layer | | Thermoplastic resin composition 2 | Thermoplastic resin composition 3 | Thermoplastic resin composition 4 |
| | | Polyamide 6 | PPS | PEKK |
| Presence or absence of vibration applied by passing through ultrasonic wave generator | | Yes | Yes | Yes |
| Preform molding conditions | Curing temperature (°C) | 180 | 180 | 180 |
| | Curing time (hour) | 2 | 2 | 2 |
| Thermoplastic resin layer constitution | Second thermosetting resin region | Thermosetting resin composition 2 | Thermosetting resin composition 1 | Thermosetting resin composition 1 |
| | Second thermosetting resin region size (μm) | 2 | 2 | 2 |
| | Presence or absence of binding between plurality of reinforcing fibers and second thermosetting resin | Yes | Yes | Yes |
| Volume ratio A (volume%) of dispersed phase of second thermosetting resin to thermoplastic resin contained in thermoplastic resin layer | | 26 | 13 | 12 |
| Volume ratio B (volume%) of dispersed phase of second thermosetting resin to carbon fibers contained in thermoplastic resin layer | | 15 | 6 | 8 |
| Sum of volume ratios (volume%) of reinforcing fibers and second thermosetting resin contained in thermoplastic resin layer | | 47 | 29 | 30 |
| Weldability evaluation of fiber-reinforced plastic | | A | A | A |
| Thickness (μm) of adhesive layer of integrated product | | 25 | 27 | 25 |

Although the present invention has been described in detail with reference to specific embodiments, it will be apparent to those skilled in the art that various changes and modifications can be made without departing from the spirit and scope of the present invention. The present application is based on a Japanese Patent Application (Japanese Patent Application No. 2020-096947) filed on June 3, 2020, the content of which is incorporated herein by reference.

REFERENCE SIGNS LIST

1, 14: reinforcing fiber
2: thermosetting resin layer
3: thermoplastic resin layer
4: dispersed phase of second thermosetting resin
5: fiber-reinforced plastic or prepreg
6: fiber direction
8: cross-sectional observation surface
9: observation image
10: interface
12: reinforcing fiber group
100: end portion
120: vertical baseline
130: cross-sectional curve

## Claims

1. A fiber-reinforced plastic, comprising: a reinforcing fiber group comprising reinforcing fibers; a thermosetting resin layer comprising a first thermosetting resin; and a thermoplastic resin layer, wherein

    the thermoplastic resin layer is provided as a surface layer of the fiber-reinforced plastic,
    an interface between the thermoplastic resin layer and the thermosetting resin layer is positioned inside the reinforcing fiber group, and
    the thermoplastic resin layer contains a dispersed phase of a second thermosetting resin.

2. The fiber-reinforced plastic according to Claim 1, wherein the reinforcing fibers contained in the thermoplastic resin layer are in contact with the dispersed phase of the second thermosetting resin.

3. The fiber-reinforced plastic according to Claim 1 or 2, wherein a plurality of the reinforcing fibers contained in the thermoplastic resin layer are bound by the second thermosetting resin.

4. The fiber-reinforced plastic according to any one of Claims 1 to 3, wherein the dispersed phase of the second thermosetting resin has a major axis length of 50 nm or more.

5. The fiber-reinforced plastic according to Claim 4, wherein the dispersed phase of the second thermosetting resin has the major axis length of 1 μm or more.

6. The fiber-reinforced plastic according to any one of Claims 1 to 5, wherein in a thickness direction cross section, a volume ratio of the dispersed phase of the second thermosetting resin contained in the thermoplastic resin layer is 10 volume% or more with respect to 100 volume% of the thermoplastic resin layer in the reinforcing fiber group.

7. The fiber-reinforced plastic according to any one of Claims 1 to 5, wherein in a thickness direction cross section, a volume ratio of the dispersed phase of the second thermosetting resin contained in the thermoplastic resin layer is 3 volume% or more and 50 volume% or less with respect to 100 volume% of the reinforcing fibers contained in the thermoplastic resin layer.

8. The fiber-reinforced plastic according to any one of Claims 1 to 5, wherein a sum of a volume ratio of the reinforcing fibers contained in the thermoplastic resin layer and a volume ratio of the second thermosetting resin is 10 volume% or more with respect to 100 volume% of a region of 50 μm from the interface between the thermoplastic resin layer and the thermosetting resin layer toward a surface of the thermoplastic resin layer in a thickness direction cross section.

9. The fiber-reinforced plastic according to any one of Claims 1 to 8, wherein the second thermosetting resin is the same type of resin as the first thermosetting resin.

**10.** The fiber-reinforced plastic according to any one of Claims 1 to 9, wherein the second thermosetting resin has a glass transition temperature of 150°C or higher.

**11.** An integrated product, comprising a first member comprising the fiber-reinforced plastic according to any one of Claims 1 to 10 and a second member, which are joined via the thermoplastic resin layer of the fiber-reinforced plastic.

**12.** The integrated product according to Claim 11, wherein in the integrated product, a distance t between the thermosetting resin layer and the second member is 10 μm or more.

**13.** A prepreg, comprising: a reinforcing fiber group comprising reinforcing fibers; a thermosetting resin layer comprising a first thermosetting resin; and a thermoplastic resin layer, wherein

the thermoplastic resin layer is provided as a surface layer of the prepreg,
an interface between the thermoplastic resin layer and the thermosetting resin layer is positioned inside the reinforcing fiber group, and
the thermoplastic resin layer contains a dispersed phase of a second thermosetting resin in contact with the reinforcing fibers.

**14.** The prepreg according to Claim 13, wherein the dispersed phase of the second thermosetting resin has a major axis length of 1 μm or more.

**15.** The prepreg according to Claim 13 or 14, wherein a sum of a volume ratio of the reinforcing fibers contained in the thermoplastic resin layer and a volume ratio of the second thermosetting resin is 10 volume% or more with respect to 100 volume% of a region of 50 μm from the interface between the thermoplastic resin layer and the thermosetting resin layer toward a surface of the thermoplastic resin layer in a thickness direction cross section.

**16.** The prepreg according to any one of Claims 13 to 15, wherein the second thermosetting resin is the same type of resin as the first thermosetting resin.

**17.** The fiber-reinforced plastic according to any one of Claims 1 to 10, the integrated product according to Claim 11 or 12, or the prepreg according to any one of Claims 13 to 16, wherein a reinforcing fiber having a surface free energy of 10 $mJ/m^2$ to 50 $mJ/m^2$ as measured by the Wilhelmy method is used as the reinforcing fibers.

FIG. 1

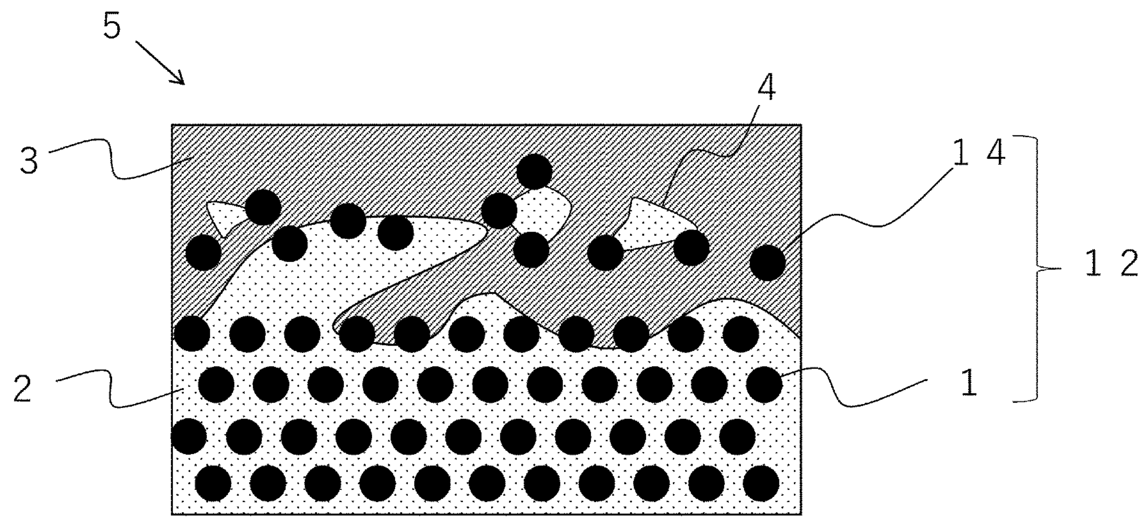


FIG. 2

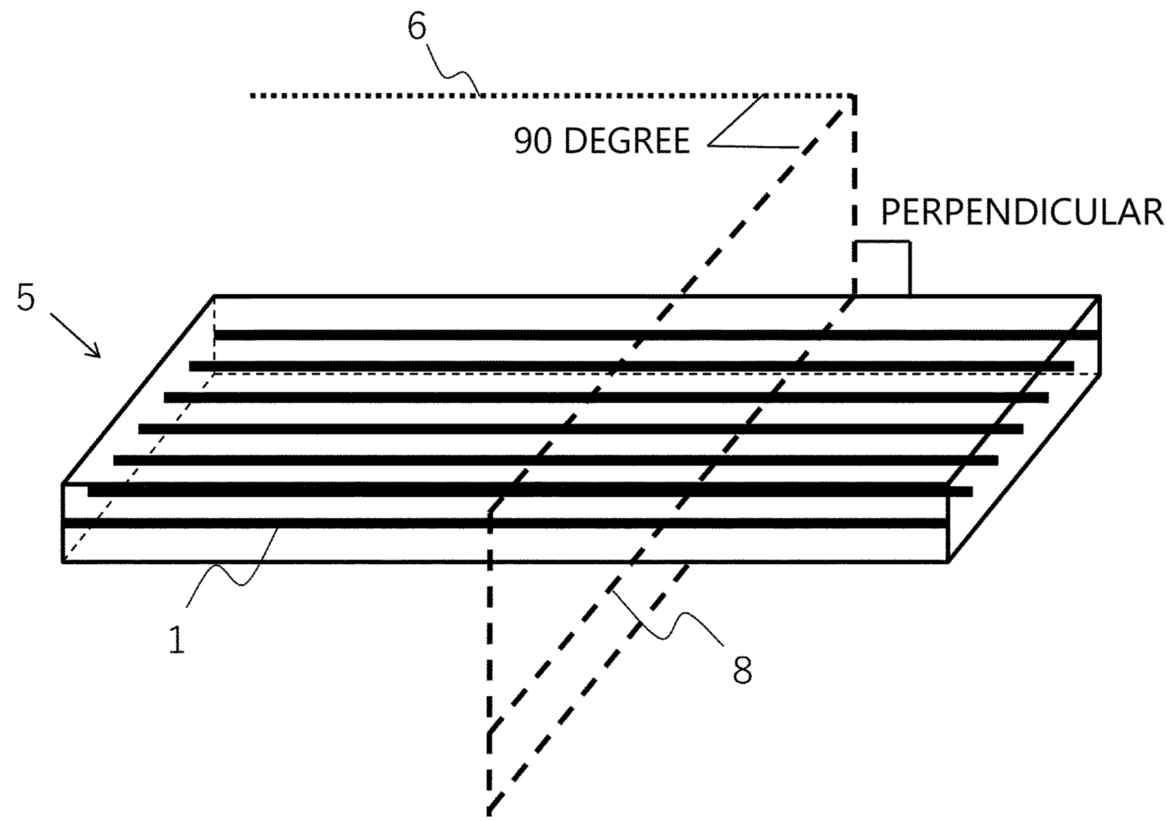

FIG. 3

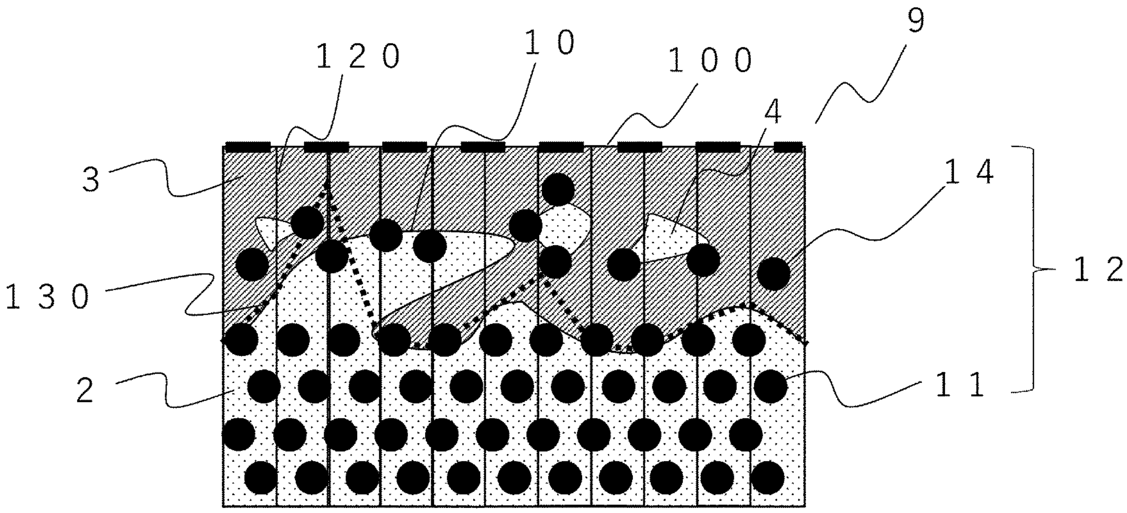

## INTERNATIONAL SEARCH REPORT

International application No.
PCT/JP2021/021104

A. CLASSIFICATION OF SUBJECT MATTER
B29C 70/06(2006.01)i; B29B 11/16(2006.01)i; B29C 70/10(2006.01)i
FI: B29C70/06; B29B 11/16; B29C70/10

According to International Patent Classification (IPC) or to both national classification and IPC

B. FIELDS SEARCHED

Minimum documentation searched (classification system followed by classification symbols)
B29B11/16, B29B15/08-15/14, B29C65/00-65/82, B29C70/00-70/88, B32B1/00-43/00, C08J5/04-5/10, C08J5/24

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2016-3257 A (TORAY INDUSTRIES, INC.) 12 January 2016 (2016-01-12) claims, paragraphs [0013]-[0017], [0040]-[0047], [0055], [0056], [0078]-[0093], fig. 1, 2 | 1-10, 13-16<br>11-12, 17 |
| Y | JP 2007-254718 A (TORAY INDUSTRIES, INC.) 04 October 2007 (2007-10-04) fig. 3 | 11-12, 17 |
| Y | JP 2015-531425 A (TORAY INDUSTRIES, INC.) 02 November 2015 (2015-11-02) paragraph [0017] | 17 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 July 2021 (26.07.2021) | 10 August 2021 (10.08.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/021104

| Patent Documents referred in the Report | Publication Date | Patent Family | Publication Date |
|---|---|---|---|
| JP 2016-3257 A | 12 Jan. 2016 | (Family: none) | |
| JP 2007-254718 A | 04 Oct. 2007 | (Family: none) | |
| JP 2015-531425 A | 02 Nov. 2015 | US 2015/0240042 A1<br>paragraph [0017]<br>WO 2014/060815 A1<br>CN 104718245 A<br>KR 10-2015-0070104 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2004060658 A
- WO 2008020628 A
- JP 2016175397 A
- JP 2017039234 A
- JP 2020096947 A